# EUROPEAN PATENT APPLICATION

(11) **EP 4 796 981 A1**
(43) Date of publication of application: **26.08.2026**
(21) Application number: 26154705.3
(22) Date of filing: 28.01.2026
(51) Int. Cl.: G02C 7/02, G02C 7/04, G02C 7/06

(54) **OPHTHALMIC LENS**

(30) Priority: 25.02.2025 TW 114106967
(71) Applicant: Yung Sheng Optical Co., Ltd., Daya Dist. Taichung City 428 (TW)
(72) Inventor: TSAI, Tsung-Min, 428 Taichung City (TW)
(74) Representative: Viering, Jentschura & Partner mbB Patent- und Rechtsanwälte

(57) **Abstract**

An ophthalmic lens (100-1300) includes a central optical area (10), a first annular optical area (20) surrounding the central optical area (10), a second annular optical area (30) surrounding the first annular optical area (20), and a third annular optical area (40) surrounding the second annular optical area (30). The ophthalmic lens (100-1300) is defined with a first refractive correction area (A1-A13), a second refractive correction area (B1-B13), a third refractive correction area (C1-C13), and a fourth refractive correction area (D1-D13). The first refractive correction area (A1-A13), the second refractive correction area (B1-B13), the third refractive correction area (C1-C13), and the fourth refractive correction area (D1-D13) are selectively disposed in any of the central optical area (10), the first annular optical area (20), the second annular optical area (30), and the third annular optical area (40).

## Description

### BACKGROUND OF THE INVENTION

### Technical Field

The present invention relates generally to an ophthalmic lens, and more particularly to a multifocal ophthalmic lens.

### Description of Related Art

With a prevalence of the 3C products, an age of onset of myopia among the children and the adolescents becomes younger, so that the patients suffering from high myopia become more. Vision problems includes not only myopia and hyperopia but also myopic astigmatism and hyperopic astigmatism. When a light passes through a cornea and is focused at a retina, a clear image could be formed at the retina. However, when the light is focused at multifocal points instead of a single focal point, astigmatism is formed, thereby causing an image distortion and an optical blur, etc. Therefore, a vision quality is seriously affected.

To conventionally correct the vision, ophthalmic lenses are used such as contact lenses. Because a dioptric power profile of the ophthalmic lens with a multifocal vision correction is provided with a dioptric power gradually increasing from a central area to a peripheral area, a user wearing the ophthalmic lens tends to feel uncomfortable, especially the user wears the ophthalmic lens for a longer time, thereby reducing a vision control.

### BRIEF SU MMARY OF THE INVENTION

In view of the above, the primary objective of the present invention is to provide an ophthalmic lens, which is provided with a multifocal power profile. The multifocal dioptric power profile could be arranged upon the required demand for a vision correction, thereby relieving eyestrain. Therefore, a user could easily wear the ophthalmic lens with a clear vision.

The present invention provides an ophthalmic lens including a central optical area, a first annular optical area, a second annular optical area, and a third annular optical area, wherein the central optical area has a center point. The first annular optical area surrounds the central optical area. The second annular optical area surrounds the first annular optical area. The third annular optical area surrounds the second annular optical area. The ophthalmic lens is defined with a first refractive correction area, a second refractive correction area, a third refractive correction area, and a fourth refractive correction area, wherein the first refractive correction area, the second refractive correction area, the third refractive correction area, and the fourth refractive correction area are selectively disposed in any of the central optical area, the first annular optical area, the second annular optical area, and the third annular optical area. The ophthalmic lens has a dioptric power profile, wherein the dioptric power profile presents a horizontal line in the first refractive correction area. The dioptric power profile presents a wavy curve in the second refractive correction area, the third refractive correction area, and the fourth refractive correction area. At least one peak is formed in each of the second refractive correction area, the third refractive correction area, and the fourth refractive correction area. The ophthalmic lens satisfies: 3.5 mm≤Z1+Z2+Z3+Z4≤5.0 mm, wherein Z1 is a distance between the center point and a boundary of the central optical area. Z2 is a distance between the boundary of the central optical area and a boundary of the first annular optical area. Z3 is a distance between the boundary of the first annular optical area and a boundary of the second annular optical area. Z4 is a distance between the boundary of the second annular optical area and a boundary of the third annular optical area.

With the aforementioned design, through the multifocal power profile of the ophthalmic lens, eyestrain of the user could be relieved, and the user could easily wear the ophthalmic lens with the clear vision. In addition, the ophthalmic lens could be provided with the first refractive correction area, the second refractive correction area, the third refractive correction area, and the fourth refractive correction area selectively disposed in any of the central optical area, the first annular optical area, the second annular optical area, and the third annular optical area upon the required demand for the vision correction. The dioptric power profile is adjusted in each of the first refractive correction area, the second refractive correction area, the third refractive correction area, and the fourth refractive correction area, thereby increasing a diversity of the dioptric power profile of the ophthalmic lens.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1A is a schematic view of the ophthalmic lens according to a first embodiment of the present invention;
FIG. 1B is a curve diagram of the dioptric power profile of the ophthalmic lens according to the first embodiment of the present invention;
FIG. 2 is a curve diagram of the dioptric power profile of the ophthalmic lens according to a second embodiment of the present invention;
FIG. 3 is a curve diagram of the dioptric power profile of the ophthalmic lens according to a third embodiment of the present invention;
FIG. 4 is a curve diagram of the dioptric power profile of the ophthalmic lens according to a fourth embodiment of the present invention;
FIG. 5 is a curve diagram of the dioptric power profile of the ophthalmic lens according to a fifth embodiment of the present invention;
FIG. 6 is a curve diagram of the dioptric power profile of the ophthalmic lens according to a sixth embodiment of the present invention;
FIG. 7 is a curve diagram of the dioptric power profile of the ophthalmic lens according to a seventh embodiment of the present invention;
FIG. 8 is a curve diagram of the dioptric power profile of the ophthalmic lens according to an eighth embodiment of the present invention;
FIG. 9 is a curve diagram of the dioptric power profile of the ophthalmic lens according to a ninth embodiment of the present invention;
FIG. 10 is a curve diagram of the dioptric power profile of the ophthalmic lens according to a tenth embodiment of the present invention;
FIG. 11 is a curve diagram of the dioptric power profile of the ophthalmic lens according to an eleventh embodiment of the present invention;
FIG. 12 is a curve diagram of the dioptric power profile of the ophthalmic lens according to a twelfth embodiment of the present invention; and
FIG. 13 is a curve diagram of the dioptric power profile of the ophthalmic lens according to a thirteenth embodiment of the present invention.

### DETAILED DESCRIPTION OF THE INVENTION

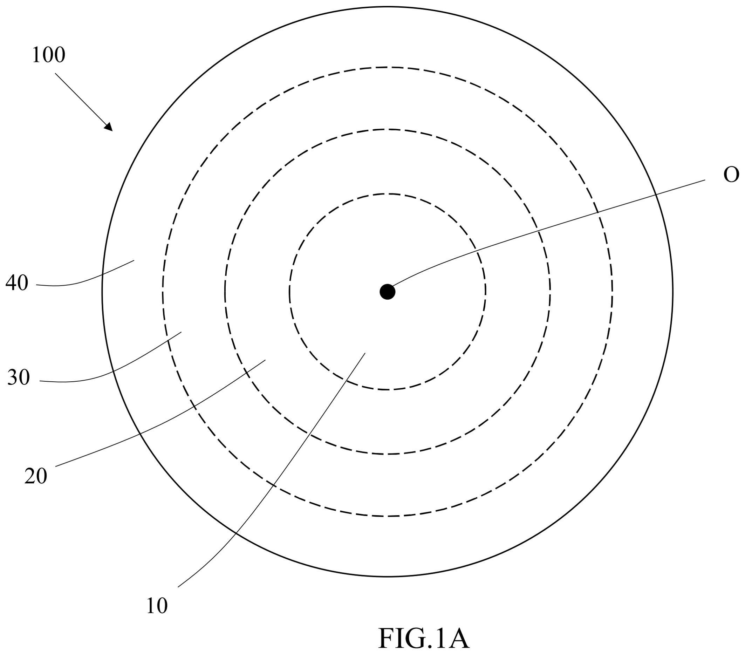

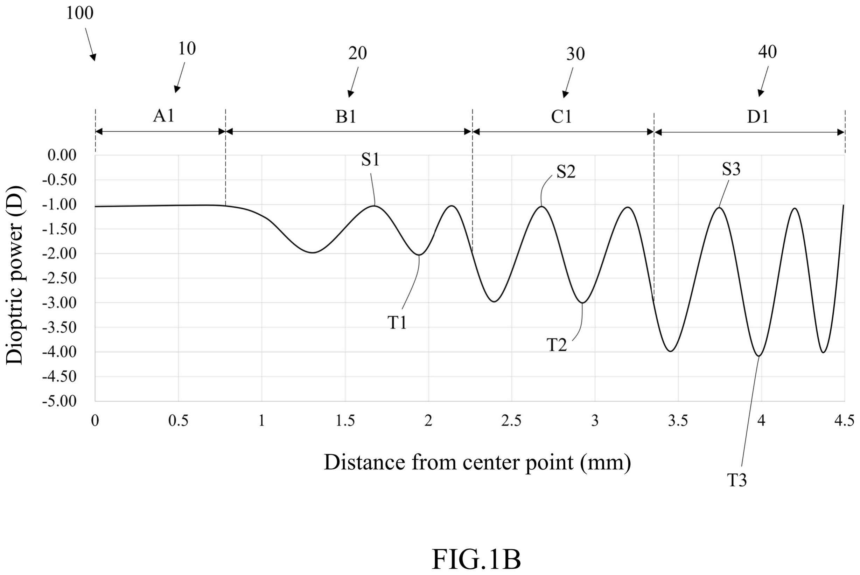

An ophthalmic lens 100 according to a first embodiment of the present invention is illustrated in FIG. 1A and FIG. 1B and includes a central optical area 10, a first annular optical area 20, a second annular optical area 30, and a third annular optical area 40. In the first embodiment, the ophthalmic lens 100 is a contact lens as illustration, but not limited thereto.

The central optical area 10 has a center point O. The first annular optical area 20 surrounds the central optical area 10. The second annular optical area 30 surrounds the first annular optical area 20. The third annular optical area 40 surrounds the second annular optical area 30. In the first embodiment, the first annular optical area 20, the second annular optical area 30, and the third annular optical area 40 are concentric and are centered at the center point O.

The ophthalmic lens 100 is defined with a first refractive correction area A1, a second refractive correction area B1, a third refractive correction area C1, and a fourth refractive correction area D1, wherein the first refractive correction area A1, the second refractive correction area B1, the third refractive correction area C1, and the fourth refractive correction area D1 are selectively disposed in any of the central optical area 10, the first annular optical area 20, the second annular optical area 30, and the third annular optical area 40. In other words, the ophthalmic lens 100 is provided with the first refractive correction area A1, the second refractive correction area B1, the third refractive correction area C1, and the fourth refractive correction area D1 selectively disposed in any of the central optical area 10, the first annular optical area 20, the second annular optical area 30, and the third annular optical area 40 upon the required demand for a vision correction, and the first refractive correction area A1, the second refractive correction area B1, the third refractive correction area C1, and the fourth refractive correction area D1 could be sequentially disposed in the central optical area 10, the first annular optical area 20, the second annular optical area 30, and the third annular optical area 40, but not limited thereto.

In an embodiment, the first refractive correction area A1 is located in one of the central optical area 10, the first annular optical area 20, the second annular optical area 30, and the third annular optical area 40, and the second refractive correction area B1 or the third refractive correction area C1 is arranged on one of two sides of the first refractive correction area A1. In another embodiment, the first refractive correction area A1 is located in the first annular optical area 20 or the second annular optical area 30, and the second refractive correction area B1 and the third refractive correction area C1 are respectively arranged on the two sides of the first refractive correction area A1. In still another embodiment, the first refractive correction area A1 is located in one of the central optical area 10, the first annular optical area 20, the second annular optical area 30, and the third annular optical area 40, and the fourth refractive correction area D1 is arranged on one of the two sides of the first refractive correction area A1. In still another embodiment, the first refractive correction area A1 is located in the first annular optical area 20 or the second annular optical area 30, the second refractive correction area B1 or the third refractive correction area C1 is arranged on a side of the first refractive correction area A1, and the fourth refractive correction area D1 is arranged on another side of the first refractive correction area A1. For example, the first refractive correction area A1, the second refractive correction area B1, the third refractive correction area C1, and the fourth refractive correction area D1 of the ophthalmic lens 100 could be selectively disposed in the central optical area 10, the first annular optical area 20, the second annular optical area 30, and the third annular optical area 40 as listed in Table 1.

**Table 1**

| Optical area arrangement | Central optical area 10 | First annular optical area 20 | Second annular optical area 30 | Third annular optical area 40 |
|---|---|---|---|---|
| | First refractive correction area A1 | Second refractive correction area B1 | Third refractive correction area C1 | Fourth refractive correction area D1 |
| | First refractive correction area A1 | Second refractive correction area B1 | Fourth refractive correction area D1 | Third refractive correction area C1 |
| Refractive correction area arrangement corresponding to optical area | First refractive correction area A1 | Third refractive correction area C1 | Second refractive correction area B1 | Fourth refractive correction area D1 |
| | First refractive correction area A1 | Third refractive correction area C1 | Fourth refractive correction area D1 | Second refractive correction area B1 |
| | First refractive correction area A1 | Fourth refractive correction area D1 | Second refractive correction area B1 | Third refractive correction area C1 |
| | First refractive correction area A1 | Fourth refractive correction area D1 | Third refractive correction area C1 | Second refractive correction area B1 |
| | Second refractive correction area B1 | First refractive correction area A1 | Third refractive correction area C1 | Fourth refractive correction area D1 |
| | Second refractive correction area B1 | First refractive correction area Al | Fourth refractive correction area D1 | Third refractive correction area C1 |
| | Second refractive correction area B1 | Third refractive correction area C1 | First refractive correction area Al | Fourth refractive correction area D1 |
| | Second refractive correction area B1 | Fourth refractive correction area D1 | First refractive correction area A1 | Third refractive correction area C1 |
| | Second refractive correction area B1 | Third refractive correction area C1 | Fourth refractive correction area D1 | First refractive correction area A1 |
| | Second refractive correction area B1 | Fourth refractive correction area D1 | Third refractive correction area C1 | First refractive correction area A1 |
| | Third refractive correction area C1 | First refractive correction area A1 | Second refractive correction area B1 | Fourth refractive correction area D1 |
| | Third refractive correction area C1 | First refractive correction area A1 | Fourth refractive correction area D1 | Second refractive correction area B1 |
| | Third refractive correction area C1 | Second refractive correction area B1 | First refractive correction area A1 | Fourth refractive correction area D1 |
| | Third refractive correction area C1 | Fourth refractive correction area D1 | First refractive correction area A1 | Second refractive correction area B1 |
| | Third refractive correction area C1 | Second refractive correction area B1 | Fourth refractive correction area D1 | First refractive correction area A1 |
| | Third refractive correction area C1 | Fourth refractive correction area D1 | Second refractive correction area B1 | First refractive correction area A1 |
| | Fourth refractive correction area D1 | First refractive correction area A1 | Second refractive correction area B1 | Third refractive correction area C1 |
| | Fourth refractive correction area D1 | First refractive correction area A1 | Third refractive correction area C1 | Second refractive correction area B1 |
| | Fourth refractive correction area D1 | Second refractive correction area B1 | First refractive correction area A1 | Third refractive correction area C1 |
| | Fourth refractive correction area D1 | Third refractive correction area C1 | First refractive correction area A1 | Second refractive correction area B1 |
| | Fourth refractive correction area D1 | Second refractive correction area B1 | Third refractive correction area C1 | First refractive correction area A1 |
| | Fourth refractive correction area D1 | Third refractive correction area C1 | Second refractive correction area B1 | First refractive correction area A1 |

The ophthalmic lens 100 has a dioptric power profile. Referring to a curve diagram of the dioptric power profile of the ophthalmic lens 100 in FIG. 1B, in the first embodiment, the first refractive correction area A1 is located in the central optical area 10. The second refractive correction area B1 is located in the first annular optical area 20. The third refractive correction area C1 is located in the second annular optical area 30. The fourth refractive correction area D1 is located in the third annular optical area 40. The dioptric power profile presents a horizontal line in the first refractive correction area A1. The dioptric power profile presents a wavy curve varying continuously in the second refractive correction area B1, the third refractive correction area C1, and the fourth refractive correction area D1. A plurality of peaks are formed in each of the second refractive correction area B1, the third refractive correction area C1, and the fourth refractive correction area D1. More specifically, the dioptric power profile has a plurality of first peaks S1 and a plurality of first valleys T1 in the second refractive correction area B1. The dioptric power profile has a plurality of second peaks S2 and a plurality of second valleys T2 in the third refractive correction area C1. The dioptric power profile has a plurality of third peaks S3 and a plurality of third valleys T3 in the fourth refractive correction area D1. In other embodiments, the dioptric power profile has at least one peak in each of the second refractive correction area B1, the third refractive correction area C1, and the fourth refractive correction area D1.

In the first embodiment, to ensure that the ophthalmic lens 100 could achieve a great vision correction effect, the ophthalmic lens 100 satisfies:
(1) $3.5 mm \leq Z 1 + Z 2 + Z 3 + Z 4 \leq 5.0 mm ;$
(2) $0.25 mm \leq Z 1 \leq 1.4 mm ;$
(3) $0.25 mm \leq Z 2 \leq 1.4 mm ;$
(4) $0.25 mm \leq Z 3 \leq 1.4 mm ;$
(5) $0.25 mm \leq Z 4 \leq 1.4 mm ;$
(6) $- 1.00 D \leq PPSD \leq 1.00 D ;$
(7) $- 2.00 D \leq PPSD - PPS 1 \leq 2.00 D ;$
(8) $- 3.00 D \leq PPS 1 - PPS 2 \leq 3.00 D ;$
(9) $- 4.00 D \leq PPS 2 - PPS 3 \leq 4.00 D ;$
(10) $1.00 D \leq \left|PPS1-PPT1\right| \leq 4.00 D ;$
(11) $1.00 D \leq \left|PPS2-PPT2\right| \leq 4.00 D ;$
(12) $1.00 D \leq \left|PPS3-PPT3\right| \leq 4.00 D .$

Z1 is a distance between the center point O and a boundary of the central optical area 10. The boundary of the central optical area 10 is an intersection between the central optical area 10 and the first annular optical area 20. The center point O is an initial point of the dioptric power profile. Z2 is a distance between the boundary of the central optical area 10 and a boundary of the first annular optical area 20. The boundary of the first annular optical area 20 is an intersection between the first annular optical area 20 and the second annular optical area 30. Z3 is a distance between the boundary of the first annular optical area 20 and a boundary of the second annular optical area 30. The boundary of the second annular optical area 30 is an intersection between the second annular optical area 30 and the third annular optical area 40. Z4 is a distance between the boundary of the second annular optical area 30 and a boundary of the third annular optical area 40. The boundary of the third annular optical area 40 is an outer peripheral edge of the ophthalmic lens 100. PPSD is a dioptric power of the first refractive correction area Al. PPS1 is a peak dioptric power of each of the first peaks S1 in the second refractive correction area B1. PPT1 is a valley dioptric power of each of the first valleys T1 in the second refractive correction area B1. In the first embodiment, PPS1 is defined as the peak dioptric power of the highest of the first peaks S1 in the second refractive correction area B1, and PPT1 is defined as the valley dioptric power of the lowest of the first valleys T1 in the second refractive correction area B1. PPS2 is a peak dioptric power of each of the second peaks S2 in the third refractive correction area C1. PPT2 is a valley dioptric power of each of the second valleys T2 in the third refractive correction area C1. In the first embodiment, PPS2 is defined as the peak dioptric power of the highest of the second peaks S2 in the third refractive correction area C1, and PPT2 is defined as the valley dioptric power of the lowest of the second valleys T2 in the third refractive correction area C1. PPS3 is a peak dioptric power of each of the third peaks S3 in the fourth refractive correction area D1. PPT3 is a valley dioptric power of each of the third valleys T3 in the fourth refractive correction area D1. In the first embodiment, PPS3 is defined as the peak dioptric power of the highest of the third peaks S3 in the fourth refractive correction area D1, and PPT3 is defined as the valley dioptric power of the lowest of the third valleys T3 in the fourth refractive correction area D1.

It could be seen from FIG. 1B that, in the first embodiment, the distance Z1 between the center point O and the boundary of the central optical area 10 is 0.8 mm. The distance Z2 between the boundary of the central optical area 10 and the boundary of the first annular optical area 20 is 1.4 mm. The distance Z3 between the boundary of the first annular optical area 20 and the boundary of the second annular optical area 30 is 1.2 mm. The distance Z4 between the boundary of the second annular optical area 30 and the boundary of the third annular optical area 40 is 1.1 mm. A total distance Z1+Z2+Z3+Z4 between the center point O of the central optical area 10 and the boundary of the third annular optical area 40 is 4.5 mm. The dioptric power PPSD of the first refractive correction area A1 is -1.00 D. The peak dioptric power PPS1 of the second refractive correction area B1 is -1.00 D. The valley dioptric power PPT1 of the second refractive correction area B1 is -2.00 D. The peak dioptric power PPS2 of the third refractive correction area C1 is -1.00 D. The valley dioptric power PPT2 of the third refractive correction area C1 is -3.00 D. The peak dioptric power PPS3 of the fourth refractive correction area D1 is -1.00 D. The valley dioptric power PPT3 of the fourth refractive correction area D1 is -4.00 D.

Therefore, based on detailed values of the aforementioned dioptric power profile, detailed values of the aforementioned conditions of the ophthalmic lens 100 in the first embodiment are as follows:
(1) $Z 1 + Z 2 + Z 3 + Z 4 = 4.5 mm ;$
(2) $Z 1 = 0.8 mm ;$
(3) $Z 2 = 1.4 mm ;$
(4) $Z 3 = 1.2 mm ;$
(5) $Z 4 = 1.1 mm ;$
(6) $PPSD = - 1.00 D ;$
(7) $PPSD - PPS 1 = 0 ;$
(8) $PPS 1 - PPS 2 = 0 ;$
(9) $PPS 2 - PPS 3 = 0 ;$
(10) $\left|PPS1-PPT1\right| = 1.00 D ;$
(11) $\left|PPS2-PPT2\right| = 2.00 D ;$
(12) $\left|PPS3-PPT3\right| = 3.00 D .$

Therefore, in the first embodiment, the total distance Z1+Z2+Z3+Z4, the distance Z1, the distance Z2, the distance Z3, the distance Z4, the dioptric power PPSD, the peak dioptric power PPS1, the valley dioptric power PPT1, the peak dioptric power PPS2, the valley dioptric power PPT2, the peak dioptric power PPS3, and the valley dioptric power PPT3 satisfy the aforementioned conditions (1) to (12) of the ophthalmic lens 100. In addition, in the first embodiment, the dioptric power of the first refractive correction area A1, the peak dioptric power of the second refractive correction area B1, the peak dioptric power of the third refractive correction area C1, and the peak dioptric power of the fourth refractive correction area D1 of the ophthalmic lens 100 are identical. A difference |PPS1-PPT1 I between the peak dioptric power of the second refractive correction area B1 and the valley dioptric power of the second refractive correction area B1 is less than a difference I PPS2-PPT2 | between the peak dioptric power of the third refractive correction area C1 and the valley dioptric power of the third refractive correction area C1. The difference |PPS2-PPT2 | between the peak dioptric power of the third refractive correction area C1 and the valley dioptric power of the third refractive correction area C1 is less than a difference |PPS3-PPT3 | between the peak dioptric power of the fourth refractive correction area D1 and the valley dioptric power of the fourth refractive correction area D1. Therefore, through a multifocal power profile of the ophthalmic lens 100 and the dioptric power of the central optical area 10, the peak dioptric power of the first annular optical area 20, the peak dioptric power of the second annular optical area 30, and the peak dioptric power of the third annular optical area 40 being identical, eyestrain of a user could be relieved and the user could easily wear the ophthalmic lens 100 with a clear vision.

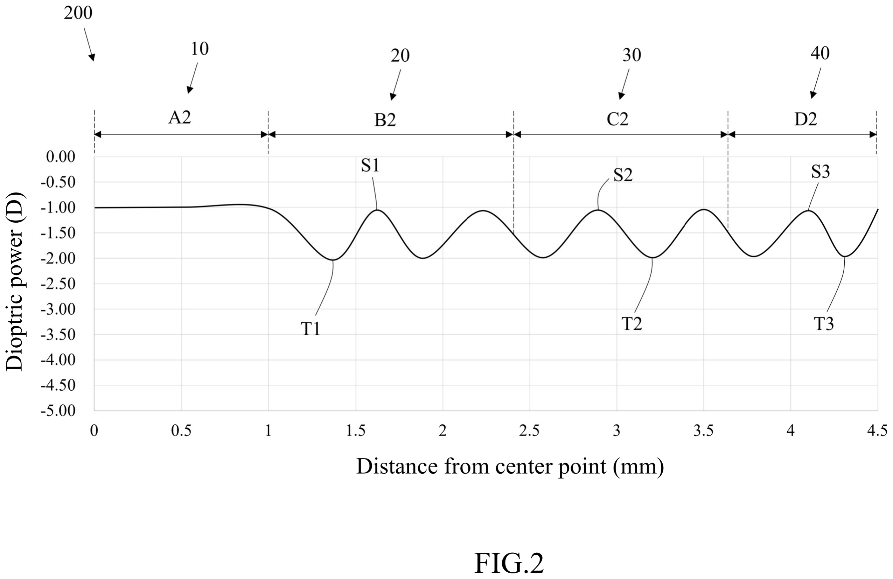

An ophthalmic lens 200 according to a second embodiment of the present invention is illustrated in FIG. 2 and includes a central optical area 10, a first annular optical area 20, a second annular optical area 30, and a third annular optical area 40. The central optical area 10, the first annular optical area 20, the second annular optical area 30, and the third annular optical area 40 of the second embodiment are identical to the central optical area 10, the first annular optical area 20, the second annular optical area 30, and the third annular optical area 40 of the first embodiment. In other words, in the second embodiment, the first annular optical area 20, the second annular optical area 30, and the third annular optical area 40 sequentially surround the central optical area 10.

The ophthalmic lens 200 is defined with a first refractive correction area A2, a second refractive correction area B2, a third refractive correction area C2, and a fourth refractive correction area D2, wherein the first refractive correction area A2, the second refractive correction area B2, the third refractive correction area C2, and the fourth refractive correction area D2 are selectively disposed in any of the central optical area 10, the first annular optical area 20, the second annular optical area 30, and the third annular optical area 40. The ophthalmic lens 200 has a dioptric power profile. Referring to a curve diagram of the dioptric power profile of the ophthalmic lens 200 in FIG. 2, in the second embodiment, the first refractive correction area A2 is located in the central optical area 10. The second refractive correction area B2 is located in the first annular optical area 20. The third refractive correction area C2 is located in the second annular optical area 30. The fourth refractive correction area D2 is located in the third annular optical area 40. The dioptric power profile presents a horizontal line in the first refractive correction area A2. The dioptric power profile presents a wavy curve varying continuously in the second refractive correction area B2, the third refractive correction area C2, and the fourth refractive correction area D2. A plurality of peaks are formed in each of the second refractive correction area B2, the third refractive correction area C2, and the fourth refractive correction area D2. More specifically, the dioptric power profile has a plurality of first peaks S1 and a plurality of first valleys T1 in the second refractive correction area B2. The dioptric power profile has a plurality of second peaks S2 and a plurality of second valleys T2 in the third refractive correction area C2. The dioptric power profile has a plurality of third peaks S3 and a plurality of third valleys T3 in the fourth refractive correction area D2. In other embodiments, the dioptric power profile has at least one peak in each of the second refractive correction area B2, the third refractive correction area C2, and the fourth refractive correction area D2.

In the second embodiment, to ensure that the ophthalmic lens 200 could achieve a great vision correction effect, the ophthalmic lens 200 satisfies:
(1) $3.5 mm \leq Z 1 + Z 2 + Z 3 + Z 4 \leq 5.0 mm ;$
(2) $0.25 mm \leq Z 1 \leq 1.4 mm ;$
(3) $0.25 mm \leq Z 2 \leq 1.4 mm ;$
(4) $0.25 mm \leq Z 3 \leq 1.4 mm ;$
(5) $0.25 mm \leq Z 4 \leq 1.4 mm ;$
(6) $- 1.00 D \leq PPSD \leq 1.00 D ;$
(7) $- 2.00 D \leq PPSD - PPS 1 \leq 2.00 D ;$
(8) $- 3.00 D \leq PPS 1 - PPS 2 \leq 3.00 D ;$
(9) $- 4.00 D \leq PPS 2 - PPS 3 \leq 4.00 D ;$
(10) $1.00 D \leq \left|PPS1-PPT1\right| \leq 4.00 D ;$
(11) $1.00 D \leq \left|PPS2-PPT2\right| \leq 4.00 D ;$
(12) $1.00 D \leq \left|PPS3-PPT3\right| \leq 4.00 D .$

Z1 is a distance between the center point O and a boundary of the central optical area 10. Z2 is a distance between the boundary of the central optical area 10 and a boundary of the first annular optical area 20. Z3 is a distance between the boundary of the first annular optical area 20 and a boundary of the second annular optical area 30. Z4 is a distance between the boundary of the second annular optical area 30 and a boundary of the third annular optical area 40. PPSD is a dioptric power of the first refractive correction area A2. PPS1 is a peak dioptric power of each of the first peaks S1 in the second refractive correction area B2. PPT1 is a valley dioptric power of each of the first valleys T1 in the second refractive correction area B2. In the second embodiment, PPS1 is defined as the peak dioptric power of the highest of the first peaks S1 in the second refractive correction area B2, and PPT1 is defined as the valley dioptric power of the lowest of the first valleys T1 in the second refractive correction area B2. PPS2 is a peak dioptric power of each of the second peaks S2 in the third refractive correction area C2. PPT2 is a valley dioptric power of each of the second valleys T2 in the third refractive correction area C2. In the second embodiment, PPS2 is defined as the peak dioptric power of the highest of the second peaks S2 in the third refractive correction area C2, and PPT2 is defined as the valley dioptric power of the lowest of the second valleys T2 in the third refractive correction area C2. PPS3 is a peak dioptric power of each of the third peaks S3 in the fourth refractive correction area D2. PPT3 is a valley dioptric power of each of the third valleys T3 in the fourth refractive correction area D2. In the second embodiment, PPS3 is defined as the peak dioptric power of the highest of the third peaks S3 in the fourth refractive correction area D2, and PPT3 is defined as the valley dioptric power of the lowest of the third valleys T3 in the fourth refractive correction area D2.

It could be seen from FIG. 2 that, in the second embodiment, the distance Z1 between the center point O and the boundary of the central optical area 10 is 1.0 mm. The distance Z2 between the boundary of the central optical area 10 and the boundary of the first annular optical area 20 is 1.4 mm. The distance Z3 between the boundary of the first annular optical area 20 and the boundary of the second annular optical area 30 is 1.2 mm. The distance Z4 between the boundary of the second annular optical area 30 and the boundary of the third annular optical area 40 is 0.9 mm. A total distance Z1+Z2+Z3+Z4 between the center point O of the central optical area 10 and the boundary of the third annular optical area 40 is 4.5 mm. The dioptric power PPSD of the first refractive correction area A2 is -1.00 D. The peak dioptric power PPS1 of the second refractive correction area B2 is -1.00 D. The valley dioptric power PPT1 of the second refractive correction area B2 is -2.00 D. The peak dioptric power PPS2 of the third refractive correction area C2 is -1.00 D. The valley dioptric power PPT2 of the third refractive correction area C2 is -2.00 D. The peak dioptric power PPS3 of the fourth refractive correction area D2 is -1.00 D. The valley dioptric power PPT3 of the fourth refractive correction area D2 is -2.00 D.

Therefore, based on detailed values of the aforementioned dioptric power profile, detailed values of the aforementioned conditions of the ophthalmic lens 200 in the second embodiment are as follows:
(1) $Z 1 + Z 2 + Z 3 + Z 4 = 4.5 mm ;$
(2) $Z 1 = 1.0 mm ;$
(3) $Z 2 = 1.4 mm ;$
(4) $Z 3 = 1.2 mm ;$
(5) $Z 4 = 0.9 mm ;$
(6) $PPSD = - 1.00 D ;$
(7) $PPSD - PPS 1 = 0 ;$
(8) $PPS 1 - PPS 2 = 0 ;$
(9) $PPS 2 - PPS 3 = 0 ;$
(10) $\left|PPS1-PPT1\right| = 1.00 D ;$
(11) $\left|PPS2-PPT2\right| = 1.00 D ;$
(12) $\left|PPS3-PPT3\right| = 1.00 D .$

Therefore, in the second embodiment, the total distance Z1+Z2+Z3+Z4, the distance Z1, the distance Z2, the distance Z3, the distance Z4, the dioptric power PPSD, the peak dioptric power PPS1, the valley dioptric power PPT1, the peak dioptric power PPS2, the valley dioptric power PPT2, the peak dioptric power PPS3, and the valley dioptric power PPT3 satisfy the aforementioned conditions (1) to (12) of the ophthalmic lens 200. In addition, in the second embodiment, the dioptric power of the first refractive correction area A2, the peak dioptric power of the second refractive correction area B2, the peak dioptric power of the third refractive correction area C2, and the peak dioptric power of the fourth refractive correction area D2 of the ophthalmic lens 200 are identical. A difference I PPS1-PPT1 I between the peak dioptric power of the second refractive correction area B2 and the valley dioptric power of the second refractive correction area B2, a difference I PPS2-PPT2 | between the peak dioptric power of the third refractive correction area C2 and the valley dioptric power of the third refractive correction area C2, and a difference I PPS3-PPT3 | between the peak dioptric power of the fourth refractive correction area D2 and the valley dioptric power of the fourth refractive correction area D2 are identical. Therefore, through a multifocal power profile of the ophthalmic lens 200 and the dioptric power of the central optical area 10, the peak dioptric power of the first annular optical area 20, the peak dioptric power of the second annular optical area 30, and the peak dioptric power of the third annular optical area 40 being identical, eyestrain of a user could be relieved and the user could easily wear the ophthalmic lens 200 with a clear vision.

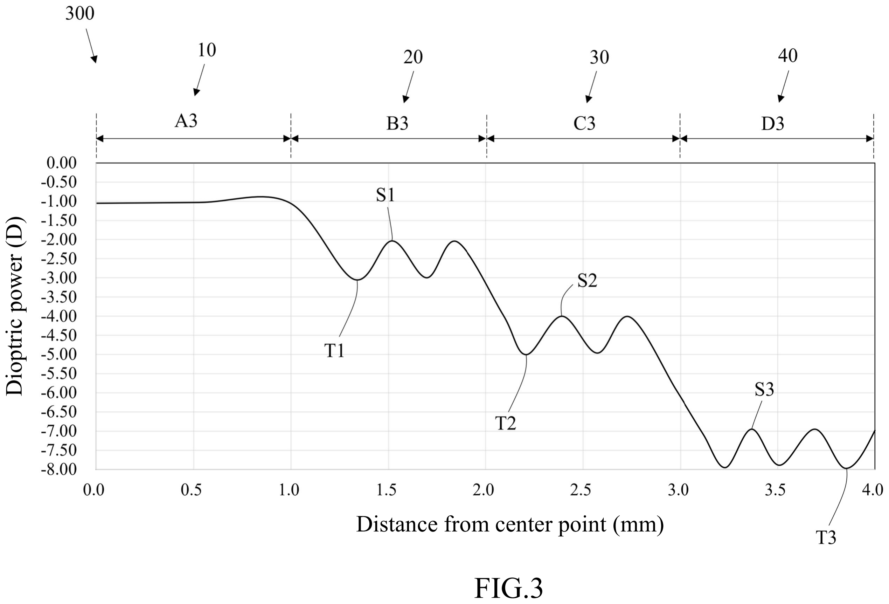

An ophthalmic lens 300 according to a third embodiment of the present invention is illustrated in FIG. 3 and includes a central optical area 10, a first annular optical area 20, a second annular optical area 30, and a third annular optical area 40. The central optical area 10, the first annular optical area 20, the second annular optical area 30, and the third annular optical area 40 of the third embodiment are identical to the central optical area 10, the first annular optical area 20, the second annular optical area 30, and the third annular optical area 40 of the first embodiment. In other words, in the third embodiment, the first annular optical area 20, the second annular optical area 30, and the third annular optical area 40 sequentially surround the central optical area 10.

The ophthalmic lens 300 is defined with a first refractive correction area A3, a second refractive correction area B3, a third refractive correction area C3, and a fourth refractive correction area D3, wherein the first refractive correction area A3, the second refractive correction area B3, the third refractive correction area C3, and the fourth refractive correction area D3 are selectively disposed in any of the central optical area 10, the first annular optical area 20, the second annular optical area 30, and the third annular optical area 40. The ophthalmic lens 300 has a dioptric power profile. Referring to a curve diagram of the dioptric power profile of the ophthalmic lens 300 in FIG. 3, in the third embodiment, the first refractive correction area A3 is located in the central optical area 10. The second refractive correction area B3 is located in the first annular optical area 20. The third refractive correction area C3 is located in the second annular optical area 30. The fourth refractive correction area D3 is located in the third annular optical area 40. The dioptric power profile presents a horizontal line in the first refractive correction area A3. The dioptric power profile presents a wavy curve varying continuously in the second refractive correction area B3, the third refractive correction area C3, and the fourth refractive correction area D3. A plurality of peaks are formed in each of the second refractive correction area B3, the third refractive correction area C3, and the fourth refractive correction area D3. More specifically, the dioptric power profile has a plurality of first peaks S1 and a plurality of first valleys T1 in the second refractive correction area B3. The dioptric power profile has a plurality of second peaks S2 and a plurality of second valleys T2 in the third refractive correction area C3. The dioptric power profile has a plurality of third peaks S3 and a plurality of third valleys T3 in the fourth refractive correction area D3. In other embodiments, the dioptric power profile has at least one peak in each of the second refractive correction area B3, the third refractive correction area C3, and the fourth refractive correction area D3.

In the third embodiment, to ensure that the ophthalmic lens 300 could achieve a great vision correction effect, the ophthalmic lens 300 satisfies:
(1) $3.5 mm \leq Z 1 + Z 2 + Z 3 + Z 4 \leq 5.0 mm ;$
(2) $0.25 mm \leq Z 1 \leq 1.4 mm ;$
(3) $0.25 mm \leq Z 2 \leq 1.4 mm ;$
(4) $0.25 mm \leq Z 3 \leq 1.4 mm ;$
(5) $0.25 mm \leq Z 4 \leq 1.4 mm ;$
(6) $- 1.00 D \leq PPSD \leq 1.00 D ;$
(7) $- 2.00 D \leq PPSD - PPS 1 \leq 2.00 D ;$
(8) $- 3.00 D \leq PPS 1 - PPS 2 \leq 3.00 D ;$
(9) $- 4.00 D \leq PPS 2 - PPS 3 \leq 4.00 D ;$
(10) $1.00 D \leq \left|PPS1-PPT1\right| \leq 4.00 D ;$
(11) $1.00 D \leq \left|PPS2-PPT2\right| \leq 4.00 D ;$
(12) $1.00 D \leq \left|PPS3-PPT3\right| \leq 4.00 D .$

Z1 is a distance between the center point O and a boundary of the central optical area 10. Z2 is a distance between the boundary of the central optical area 10 and a boundary of the first annular optical area 20. Z3 is a distance between the boundary of the first annular optical area 20 and a boundary of the second annular optical area 30. Z4 is a distance between the boundary of the second annular optical area 30 and a boundary of the third annular optical area 40. PPSD is a dioptric power of the first refractive correction area A3. PPS1 is a peak dioptric power of each of the first peaks S1 in the second refractive correction area B3. PPT1 is a valley dioptric power of each of the first valleys T1 in the second refractive correction area B3. In the third embodiment, PPS1 is defined as the peak dioptric power of the highest of the first peaks S1 in the second refractive correction area B3, and PPT1 is defined as the valley dioptric power of the lowest of the first valleys T1 in the second refractive correction area B3. PPS2 is a peak dioptric power of each of the second peaks S2 in the third refractive correction area C3. PPT2 is a valley dioptric power of each of the second valleys T2 in the third refractive correction area C3. In the third embodiment, PPS2 is defined as the peak dioptric power of the highest of the second peaks S2 in the third refractive correction area C3, and PPT2 is defined as the valley dioptric power of the lowest of the second valleys T2 in the third refractive correction area C3. PPS3 is a peak dioptric power of each of the third peaks S3 in the fourth refractive correction area D3. PPT3 is a valley dioptric power of each of the third valleys T3 in the fourth refractive correction area D3. In the third embodiment, PPS3 is defined as the peak dioptric power of the highest of the third peaks S3 in the fourth refractive correction area D3, and PPT3 is defined as the valley dioptric power of the lowest of the third valleys T3 in the fourth refractive correction area D3.

It could be seen from FIG. 3 that, in the third embodiment, the distance Z1 between the center point O and the boundary of the central optical area 10 is 1.0 mm. The distance Z2 between the boundary of the central optical area 10 and the boundary of the first annular optical area 20 is 1.0 mm. The distance Z3 between the boundary of the first annular optical area 20 and the boundary of the second annular optical area 30 is 1.0 mm. The distance Z4 between the boundary of the second annular optical area 30 and the boundary of the third annular optical area 40 is 1.0 mm. A total distance Z1+Z2+Z3+Z4 between the center point O of the central optical area 10 and the boundary of the third annular optical area 40 is 4.0 mm. The dioptric power PPSD of the first refractive correction area A3 is -1.00 D. The peak dioptric power PPS1 of the second refractive correction area B3 is -2.00 D. The valley dioptric power PPT1 of the second refractive correction area B3 is -3.00 D. The peak dioptric power PPS2 of the third refractive correction area C3 is -4.00 D. The valley dioptric power PPT2 of the third refractive correction area C3 is -5.00 D. The peak dioptric power PPS3 of the fourth refractive correction area D3 is -7.00 D. The valley dioptric power PPT3 of the fourth refractive correction area D3 is -8.00 D.

Therefore, based on detailed values of the aforementioned dioptric power profile, detailed values of the aforementioned conditions of the ophthalmic lens 300 in the third embodiment are as follows:
(1) $Z 1 + Z 2 + Z 3 + Z 4 = 4.0 mm ;$
(2) $Z 1 = 1.0 mm ;$
(3) $Z 2 = 1.0 mm ;$
(4) $Z 3 = 1.0 mm ;$
(5) $Z 4 = 1.0 mm ;$
(6) $PPSD = - 1.00 D ;$
(7) $PPSD - PPS 1 = 1.00 D ;$
(8) $PPS 1 - PPS 2 = 2.00 D ;$
(9) $PPS 2 - PPS 3 = 3.00 D ;$
(10) $\left|PPS1-PPT1\right| = 1.00 D ;$
(11) $\left|PPS2-PPT2\right| = 1.00 D ;$
(12) $\left|PPS3-PPT3\right| = 1.00 D .$

Therefore, in the third embodiment, the total distance Z1+Z2+Z3+Z4, the distance Z1, the distance Z2, the distance Z3, the distance Z4, the dioptric power PPSD, the peak dioptric power PPS1, the valley dioptric power PPT1, the peak dioptric power PPS2, the valley dioptric power PPT2, the peak dioptric power PPS3, and the valley dioptric power PPT3 satisfy the aforementioned conditions (1) to (12) of the ophthalmic lens 300. In addition, in the third embodiment, the dioptric power profile of the ophthalmic lens 300 gradually decreases in the first refractive correction area A3, the second refractive correction area B3, the third refractive correction area C3, and the fourth refractive correction area D3 in order of the central optical area 10, the first annular optical area 20, the second annular optical area 30, and the third annular optical area 40. A difference |PPS1-PPT1 I between the peak dioptric power of the second refractive correction area B3 and the valley dioptric power of the second refractive correction area B3, a difference I PPS2-PPT2 | between the peak dioptric power of the third refractive correction area C3 and the valley dioptric power of the third refractive correction area C3, and a difference I PPS3-PPT3 | between the peak dioptric power of the fourth refractive correction area D3 and the valley dioptric power of the fourth refractive correction area D3 are identical. Therefore, through a multifocal power profile of the ophthalmic lens 300 and reducing a dioptric power difference between any two adjacent ones of the central optical area 10, the first annular optical area 20, the second annular optical area 30, and the third annular optical area 40, eyestrain of a user could be relieved and the user could easily wear the ophthalmic lens 300 with a clear vision.

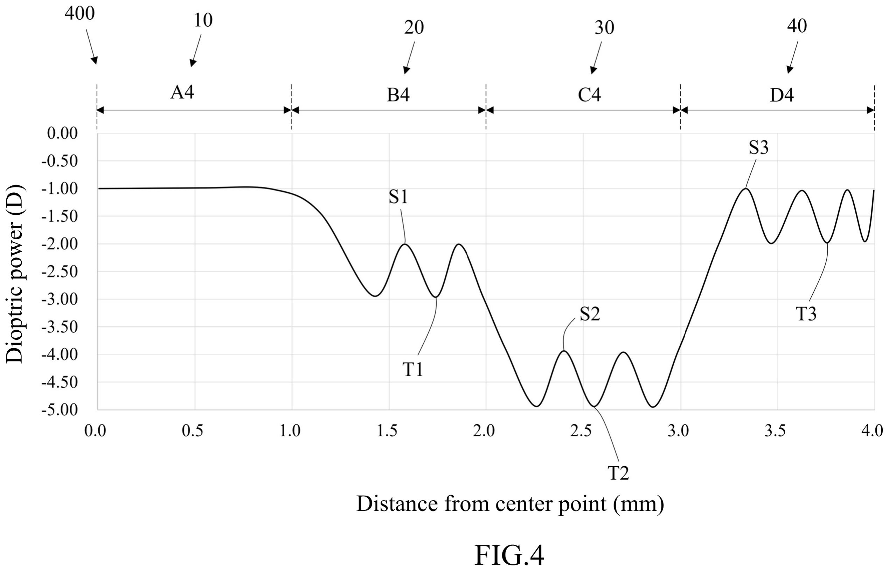

An ophthalmic lens 400 according to a fourth embodiment of the present invention is illustrated in FIG. 4 and includes a central optical area 10, a first annular optical area 20, a second annular optical area 30, and a third annular optical area 40. The central optical area 10, the first annular optical area 20, the second annular optical area 30, and the third annular optical area 40 of the fourth embodiment are identical to the central optical area 10, the first annular optical area 20, the second annular optical area 30, and the third annular optical area 40 of the first embodiment. In other words, in the fourth embodiment, the first annular optical area 20, the second annular optical area 30, and the third annular optical area 40 sequentially surround the central optical area 10.

The ophthalmic lens 400 is defined with a first refractive correction area A4, a second refractive correction area B4, a third refractive correction area C4, and a fourth refractive correction area D4, wherein the first refractive correction area A4, the second refractive correction area B4, the third refractive correction area C4, and the fourth refractive correction area D4 are selectively disposed in any of the central optical area 10, the first annular optical area 20, the second annular optical area 30, and the third annular optical area 40. The ophthalmic lens 400 has a dioptric power profile. Referring to a curve diagram of the dioptric power profile of the ophthalmic lens 400 in FIG. 4, in the fourth embodiment, the first refractive correction area A4 is located in the central optical area 10. The second refractive correction area B4 is located in the first annular optical area 20. The third refractive correction area C4 is located in the second annular optical area 30. The fourth refractive correction area D4 is located in the third annular optical area 40. The dioptric power profile presents a horizontal line in the first refractive correction area A4. The dioptric power profile presents a wavy curve varying continuously in the second refractive correction area B4, the third refractive correction area C4, and the fourth refractive correction area D4. A plurality of peaks are formed in each of the second refractive correction area B4, the third refractive correction area C4, and the fourth refractive correction area D4. More specifically, the dioptric power profile has a plurality of first peaks S1 and a plurality of first valleys T1 in the second refractive correction area B4. The dioptric power profile has a plurality of second peaks S2 and a plurality of second valleys T2 in the third refractive correction area C4. The dioptric power profile has a plurality of third peaks S3 and a plurality of third valleys T3 in the fourth refractive correction area D4. In other embodiments, the dioptric power profile has at least one peak in each of the second refractive correction area B4, the third refractive correction area C4, and the fourth refractive correction area D4.

In the fourth embodiment, to ensure that the ophthalmic lens 400 could achieve a great vision correction effect, the ophthalmic lens 400 satisfies:
(1) $3.5 mm \leq Z 1 + Z 2 + Z 3 + Z 4 \leq 5.0 mm ;$
(2) $0.25 mm \leq Z 1 \leq 1.4 mm ;$
(3) $0.25 mm \leq Z 2 \leq 1.4 mm ;$
(4) $0.25 mm \leq Z 3 \leq 1.4 mm ;$
(5) $0.25 mm \leq Z 4 \leq 1.4 mm ;$
(6) $- 1.00 D \leq PPSD \leq 1.00 D ;$
(7) $- 2.00 D \leq PPSD - PPS 1 \leq 2.00 D ;$
(8) $- 3.00 D \leq PPS 1 - PPS 2 \leq 3.00 D ;$
(9) $- 4.00 D \leq PPS 2 - PPS 3 \leq 4.00 D ;$
(10) $1.00 D \leq \left|PPS1-PPT1\right| \leq 4.00 D ;$
(11) $1.00 D \leq \left|PPS2-PPT2\right| \leq 4.00 D ;$
(12) $1.00 D \leq \left|PPS3-PPT3\right| \leq 4.00 D .$

Z1 is a distance between the center point O and a boundary of the central optical area 10. Z2 is a distance between the boundary of the central optical area 10 and a boundary of the first annular optical area 20. Z3 is a distance between the boundary of the first annular optical area 20 and a boundary of the second annular optical area 30. Z4 is a distance between the boundary of the second annular optical area 30 and a boundary of the third annular optical area 40. PPSD is a dioptric power of the first refractive correction area A4. PPS1 is a peak dioptric power of each of the first peaks S1 in the second refractive correction area B4. PPT1 is a valley dioptric power of each of the first valleys T1 in the second refractive correction area B4. In the fourth embodiment, PPS1 is defined as the peak dioptric power of the highest of the first peaks S1 in the second refractive correction area B4, and PPT1 is defined as the valley dioptric power of the lowest of the first valleys T1 in the second refractive correction area B4. PPS2 is a peak dioptric power of each of the second peaks S2 in the third refractive correction area C4. PPT2 is a valley dioptric power of each of the second valleys T2 in the third refractive correction area C4. In the fourth embodiment, PPS2 is defined as the peak dioptric power of the highest of the second peaks S2 in the third refractive correction area C4, and PPT2 is defined as the valley dioptric power of the lowest of the second valleys T2 in the third refractive correction area C4. PPS3 is a peak dioptric power of each of the third peaks S3 in the fourth refractive correction area D4. PPT3 is a valley dioptric power of each of the third valleys T3 in the fourth refractive correction area D4. In the fourth embodiment, PPS3 is defined as the peak dioptric power of the highest of the third peaks S3 in the fourth refractive correction area D4, and PPT3 is defined as the valley dioptric power of the lowest of the third valleys T3 in the fourth refractive correction area D4.

It could be seen from FIG. 4 that, in the fourth embodiment, the distance Z1 between the center point O and the boundary of the central optical area 10 is 1.0 mm. The distance Z2 between the boundary of the central optical area 10 and the boundary of the first annular optical area 20 is 1.0 mm. The distance Z3 between the boundary of the first annular optical area 20 and the boundary of the second annular optical area 30 is 1.0 mm. The distance Z4 between the boundary of the second annular optical area 30 and the boundary of the third annular optical area 40 is 1.0 mm. A total distance Z1+Z2+Z3+Z4 between the center point O of the central optical area 10 and the boundary of the third annular optical area 40 is 4.0 mm. The dioptric power PPSD of the first refractive correction area A4 is -1.00 D. The peak dioptric power PPS1 of the second refractive correction area B4 is -2.00 D. The valley dioptric power PPT1 of the second refractive correction area B4 is -3.00 D. The peak dioptric power PPS2 of the third refractive correction area C4 is -4.00 D. The valley dioptric power PPT2 of the third refractive correction area C4 is -5.00 D. The peak dioptric power PPS3 of the fourth refractive correction area D4 is -1.00 D. The valley dioptric power PPT3 of the fourth refractive correction area D4 is -2.00 D.

Therefore, based on detailed values of the aforementioned dioptric power profile, detailed values of the aforementioned conditions of the ophthalmic lens 400 in the fourth embodiment are as follows:
(1) $Z 1 + Z 2 + Z 3 + Z 4 = 4.0 mm ;$
(2) $Z 1 = 1.0 mm ;$
(3) $Z 2 = 1.0 mm ;$
(4) $Z 3 = 1.0 mm ;$
(5) $Z 4 = 1.0 mm ;$
(6) $PPSD = - 1.00 D ;$
(7) $PPSD - PPS 1 = 1.00 D ;$
(8) $PPS 1 - PPS 2 = 2.00 D ;$
(9) $PPS 2 - PPS 3 = - 3.00 D ;$
(10) $\left|PPS1-PPT1\right| = 1.00 D ;$
(11) $\left|PPS2-PPT2\right| = 1.00 D ;$
(12) $\left|PPS3-PPT3\right| = 1.00 D .$

Therefore, in the fourth embodiment, the total distance Z1+Z2+Z3+Z4, the distance Z1, the distance Z2, the distance Z3, the distance Z4, the dioptric power PPSD, the peak dioptric power PPS1, the valley dioptric power PPT1, the peak dioptric power PPS2, the valley dioptric power PPT2, the peak dioptric power PPS3, and the valley dioptric power PPT3 satisfy the aforementioned conditions (1) to (12) of the ophthalmic lens 400. In addition, in the fourth embodiment, the dioptric power profile of the ophthalmic lens 400 gradually decreases in the first refractive correction area A4, the second refractive correction area B4, and the third refractive correction area C4 in order of the central optical area 10, the first annular optical area 20, and the second annular optical area 30. The dioptric power profile of the ophthalmic lens 400 increases from the third refractive correction area C4 to the fourth refractive correction area D4. The peak dioptric power of the fourth refractive correction area D4 is identical to the dioptric power of the first refractive correction area A4. A difference I PPS1-PPT1 | between the peak dioptric power of the second refractive correction area B4 and the valley dioptric power of the second refractive correction area B4, a difference I PPS2-PPT2 | between the peak dioptric power of the third refractive correction area C4 and the valley dioptric power of the third refractive correction area C4, and a difference I PPS3-PPT3 | between the peak dioptric power of the fourth refractive correction area D4 and the valley dioptric power of the fourth refractive correction area D4 are identical. Therefore, through a multifocal power profile of the ophthalmic lens 400 and reducing a dioptric power difference between any two adjacent ones of the central optical area 10, the first annular optical area 20, the second annular optical area 30, and the third annular optical area 40, eyestrain of a user could be relieved and the user could easily wear the ophthalmic lens 400 with a clear vision.

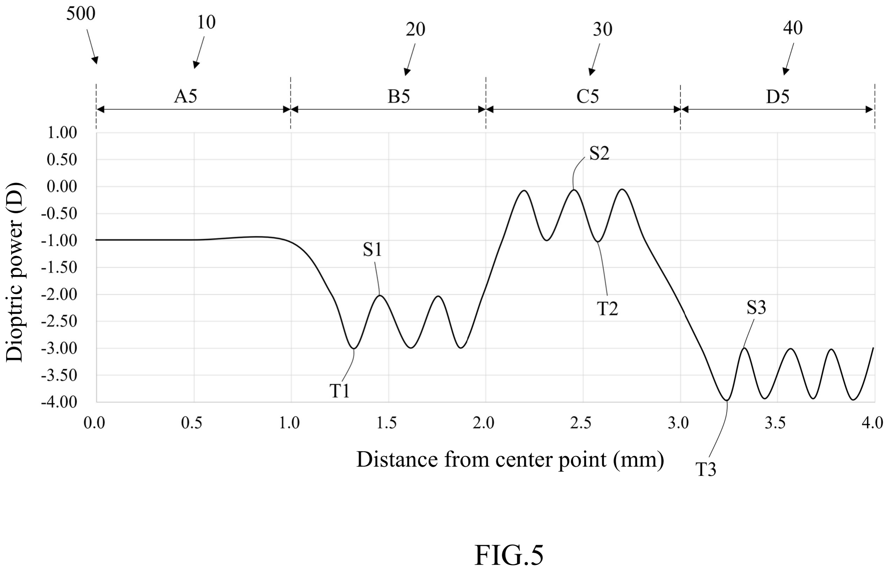

An ophthalmic lens 500 according to a fifth embodiment of the present invention is illustrated in FIG. 5 and includes a central optical area 10, a first annular optical area 20, a second annular optical area 30, and a third annular optical area 40. The central optical area 10, the first annular optical area 20, the second annular optical area 30, and the third annular optical area 40 of the fifth embodiment are identical to the central optical area 10, the first annular optical area 20, the second annular optical area 30, and the third annular optical area 40 of the first embodiment. In other words, in the fifth embodiment, the first annular optical area 20, the second annular optical area 30, and the third annular optical area 40 sequentially surround the central optical area 10.

The ophthalmic lens 500 is defined with a first refractive correction area A5, a second refractive correction area B5, a third refractive correction area C5, and a fourth refractive correction area D5, wherein the first refractive correction area A5, the second refractive correction area B5, the third refractive correction area C5, and the fourth refractive correction area D5 are selectively disposed in any of the central optical area 10, the first annular optical area 20, the second annular optical area 30, and the third annular optical area 40. The ophthalmic lens 500 has a dioptric power profile. Referring to a curve diagram of the dioptric power profile of the ophthalmic lens 500 in FIG.5, in the fifth embodiment, the first refractive correction area A5 is located in the central optical area 10. The second refractive correction area B5 is located in the first annular optical area 20. The third refractive correction area C5 is located in the second annular optical area 30. The fourth refractive correction area D5 is located in the third annular optical area 40. The dioptric power profile presents a horizontal line in the first refractive correction area A5. The dioptric power profile presents a wavy curve varying continuously in the second refractive correction area B5, the third refractive correction area C5, and the fourth refractive correction area D5. A plurality of peaks are formed in each of the second refractive correction area B5, the third refractive correction area C5, and the fourth refractive correction area D5. More specifically, the dioptric power profile has a plurality of first peaks S1 and a plurality of first valleys T1 in the second refractive correction area B5. The dioptric power profile has a plurality of second peaks S2 and a plurality of second valleys T2 in the third refractive correction area C5. The dioptric power profile has a plurality of third peaks S3 and a plurality of third valleys T3 in the fourth refractive correction area D5. In other embodiments, the dioptric power profile has at least one peak in each of the second refractive correction area B5, the third refractive correction area C5, and the fourth refractive correction area D5.

In the fifth embodiment, to ensure that the ophthalmic lens 500 could achieve a great vision correction effect, the ophthalmic lens 500 satisfies:
(1) $3.5 mm \leq Z 1 + Z 2 + Z 3 + Z 4 \leq 5.0 mm ;$
(2) $0.25 mm \leq Z 1 \leq 1.4 mm ;$
(3) $0.25 mm \leq Z 2 \leq 1.4 mm ;$
(4) $0.25 mm \leq Z 3 \leq 1.4 mm ;$
(5) $0.25 mm \leq Z 4 \leq 1.4 mm ;$
(6) $- 1.00 D \leq PPSD \leq 1.00 D ;$
(7) $- 2.00 D \leq PPSD - PPS 1 \leq 2.00 D ;$
(8) $- 3.00 D \leq PPS 1 - PPS 2 \leq 3.00 D ;$
(9) $- 4.00 D \leq PPS 2 - PPS 3 \leq 4.00 D ;$
(10) $1.00 D \leq \left|PPS1-PPT1\right| \leq 4.00 D ;$
(11) $1.00 D \leq \left|PPS2-PPT2\right| \leq 4.00 D ;$
(12) $1.00 D \leq \left|PPS3-PPT3\right| \leq 4.00 D .$

Z1 is a distance between the center point O and a boundary of the central optical area 10. Z2 is a distance between the boundary of the central optical area 10 and a boundary of the first annular optical area 20. Z3 is a distance between the boundary of the first annular optical area 20 and a boundary of the second annular optical area 30. Z4 is a distance between the boundary of the second annular optical area 30 and a boundary of the third annular optical area 40. PPSD is a dioptric power of the first refractive correction area A5. PPS1 is a peak dioptric power of each of the first peaks S1 in the second refractive correction area B5. PPT1 is a valley dioptric power of each of the first valleys T1 in the second refractive correction area B5. In the fifth embodiment, PPS1 is defined as the peak dioptric power of the highest of the first peaks S1 in the second refractive correction area B5, and PPT1 is defined as the valley dioptric power of the lowest of the first valleys T1 in the second refractive correction area B5. PPS2 is a peak dioptric power of each of the second peaks S2 in the third refractive correction area C5. PPT2 is a valley dioptric power of each of the second valleys T2 in the third refractive correction area C5. In the fifth embodiment, PPS2 is defined as the peak dioptric power of the highest of the second peaks S2 in the third refractive correction area C5, and PPT2 is defined as the valley dioptric power of the lowest of the second valleys T2 in the third refractive correction area C5. PPS3 is a peak dioptric power of each of the third peaks S3 in the fourth refractive correction area D5. PPT3 is a valley dioptric power of each of the third valleys T3 in the fourth refractive correction area D5. In the fifth embodiment, PPS3 is defined as the peak dioptric power of the highest of the third peaks S3 in the fourth refractive correction area D5, and PPT3 is defined as the valley dioptric power of the lowest of the third valleys T3 in the fourth refractive correction area D5.

It could be seen from FIG. 5 that, in the fifth embodiment, the distance Z1 between the center point O and the boundary of the central optical area 10 is 1.0 mm. The distance Z2 between the boundary of the central optical area 10 and the boundary of the first annular optical area 20 is 1.0 mm. The distance Z3 between the boundary of the first annular optical area 20 and the boundary of the second annular optical area 30 is 1.0 mm. The distance Z4 between the boundary of the second annular optical area 30 and the boundary of the third annular optical area 40 is 1.0 mm. A total distance Z1+Z2+Z3+Z4 between the center point O of the central optical area 10 and the boundary of the third annular optical area 40 is 4.0 mm. The dioptric power PPSD of the first refractive correction area A5 is -1.00 D. The peak dioptric power PPS1 of the second refractive correction area B5 is -2.00 D. The valley dioptric power PPT1 of the second refractive correction area B5 is -3.00 D. The peak dioptric power PPS2 of the third refractive correction area C5 is 0.00 D. The valley dioptric power PPT2 of the third refractive correction area C5 is -1.00 D. The peak dioptric power PPS3 of the fourth refractive correction area D5 is -3.00 D. The valley dioptric power PPT3 of the fourth refractive correction area D5 is -4.00 D.

Therefore, based on detailed values of the aforementioned dioptric power profile, detailed values of the aforementioned conditions of the ophthalmic lens 500 in the fifth embodiment are as follows:
(1) $Z 1 + Z 2 + Z 3 + Z 4 = 4.0 mm ;$
(2) $Z 1 = 1.0 mm ;$
(3) $Z 2 = 1.0 mm ;$
(4) $Z 3 = 1.0 mm ;$
(5) $Z 4 = 1.0 mm ;$
(6) $PPSD = - 1.00 D ;$
(7) $PPSD - PPS 1 = 1.00 D ;$
(8) $PPS 1 - PPS 2 = - 2.00 D ;$
(9) $PPS 2 - PPS 3 = 3.00 D ;$
(10) $\left|PPS1-PPT1\right| = 1.00 D ;$
(11) $\left|PPS2-PPT2\right| = 1.00 D ;$
(12) $\left|PPS3-PPT3\right| = 1.00 D .$

Therefore, in the fifth embodiment, the total distance Z1+Z2+Z3+Z4, the distance Z1, the distance Z2, the distance Z3, the distance Z4, the dioptric power PPSD, the peak dioptric power PPS1, the valley dioptric power PPT1, the peak dioptric power PPS2, the valley dioptric power PPT2, the peak dioptric power PPS3, and the valley dioptric power PPT3 satisfy the aforementioned conditions (1) to (12) of the ophthalmic lens 500. In addition, in the fifth embodiment, the dioptric power profile of the ophthalmic lens 500 decreases from the first refractive correction area A5 to the second refractive correction area B5. The dioptric power profile of the ophthalmic lens 500 increases from the second refractive correction area B5 to the third refractive correction area C5. A dioptric power of the third refractive correction area C5 is greater than the dioptric power of the first refractive correction area A5. The dioptric power profile of the ophthalmic lens 500 decreases from the third refractive correction area C5 to the fourth refractive correction area D5. A dioptric power of the fourth refractive correction area D5 is less than a dioptric power of the second refractive correction area B5. A difference I PPS1-PPT1 | between the peak dioptric power of the second refractive correction area B5 and the valley dioptric power of the second refractive correction area B5, a difference |PPS2-PPT2 | between the peak dioptric power of the third refractive correction area C5 and the valley dioptric power of the third refractive correction area C5, and a difference I PPS3-PPT3 | between the peak dioptric power of the fourth refractive correction area D5 and the valley dioptric power of the fourth refractive correction area D5 are identical. Therefore, through a multifocal power profile of the ophthalmic lens 500 and reducing a dioptric power difference between any two adjacent ones of the central optical area 10, the first annular optical area 20, the second annular optical area 30, and the third annular optical area 40, eyestrain of a user could be relieved and the user could easily wear the ophthalmic lens 500 with a clear vision.

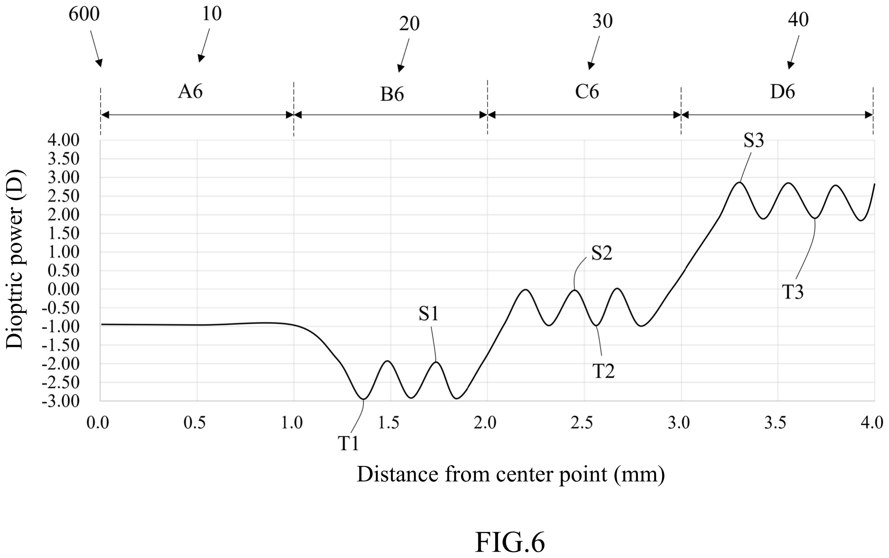

An ophthalmic lens 600 according to a sixth embodiment of the present invention is illustrated in FIG. 6 and includes a central optical area 10, a first annular optical area 20, a second annular optical area 30, and a third annular optical area 40. The central optical area 10, the first annular optical area 20, the second annular optical area 30, and the third annular optical area 40 of the sixth embodiment are identical to the central optical area 10, the first annular optical area 20, the second annular optical area 30, and the third annular optical area 40 of the first embodiment. In other words, in the sixth embodiment, the first annular optical area 20, the second annular optical area 30, and the third annular optical area 40 sequentially surround the central optical area 10.

The ophthalmic lens 600 is defined with a first refractive correction area A6, a second refractive correction area B6, a third refractive correction area C6, and a fourth refractive correction area D6, wherein the first refractive correction area A6, the second refractive correction area B6, the third refractive correction area C6, and the fourth refractive correction area D6 are selectively disposed in any of the central optical area 10, the first annular optical area 20, the second annular optical area 30, and the third annular optical area 40. The ophthalmic lens 600 has a dioptric power profile. Referring to a curve diagram of the dioptric power profile of the ophthalmic lens 600 in FIG.6, in the sixth embodiment, the first refractive correction area A6 is located in the central optical area 10. The second refractive correction area B6 is located in the first annular optical area 20. The third refractive correction area C6 is located in the second annular optical area 30. The fourth refractive correction area D6 is located in the third annular optical area 40. The dioptric power profile presents a horizontal line in the first refractive correction area A6. The dioptric power profile presents a wavy curve varying continuously in the second refractive correction area B6, the third refractive correction area C6, and the fourth refractive correction area D6. A plurality of peaks are formed in each of the second refractive correction area B6, the third refractive correction area C6, and the fourth refractive correction area D6. More specifically, the dioptric power profile has a plurality of first peaks S1 and a plurality of first valleys T1 in the second refractive correction area B6. The dioptric power profile has a plurality of second peaks S2 and a plurality of second valleys T2 in the third refractive correction area C6. The dioptric power profile has a plurality of third peaks S3 and a plurality of third valleys T3 in the fourth refractive correction area D6. In other embodiments, the dioptric power profile has at least one peak in each of the second refractive correction area B6, the third refractive correction area C6, and the fourth refractive correction area D6.

In the sixth embodiment, to ensure that the ophthalmic lens 600 could achieve a great vision correction effect, the ophthalmic lens 600 satisfies:
(1)$3.5 mm \leq Z 1 + Z 2 + Z 3 + Z 4 \leq 5.0 mm ;$
(2) $0.25 mm \leq Z 1 \leq 1.4 mm ;$
(3) $0.25 mm \leq Z 2 \leq 1.4 mm ;$
(4) $0.25 mm \leq Z 3 \leq 1.4 mm ;$
(5) $0.25 mm \leq Z 4 \leq 1.4 mm ;$
(6) $- 1.00 D \leq PPSD \leq 1.00 D ;$
(7) $- 2.00 D \leq PPSD - PPS 1 \leq 2.00 D ;$
(8) $- 3.00 D \leq PPS 1 - PPS 2 \leq 3.00 D ;$
(9) $- 4.00 D \leq PPS 2 - PPS 3 \leq 4.00 D ;$
(10)$1.00 D \leq \left|PPS1-PPT1\right| \leq 4.00 D ;$
(11) $1.00 D \leq \left|PPS2-PPT2\right| \leq 4.00 D ;$
(12) $1.00 D \leq \left|PPS3-PPT3\right| \leq 4.00 D .$

Z1 is a distance between the center point O and a boundary of the central optical area 10. Z2 is a distance between the boundary of the central optical area 10 and a boundary of the first annular optical area 20. Z3 is a distance between the boundary of the first annular optical area 20 and a boundary of the second annular optical area 30. Z4 is a distance between the boundary of the second annular optical area 30 and a boundary of the third annular optical area 40. PPSD is a dioptric power of the first refractive correction area A6. PPS1 is a peak dioptric power of each of the first peaks S1 in the second refractive correction area B6. PPT1 is a valley dioptric power of each of the first valleys T1 in the second refractive correction area B6. In the sixth embodiment, PPS1 is defined as the peak dioptric power of the highest of the first peaks S1 in the second refractive correction area B6, and PPT1 is defined as the valley dioptric power of the lowest of the first valleys T1 in the second refractive correction area B6. PPS2 is a peak dioptric power of each of the second peaks S2 in the third refractive correction area C6. PPT2 is a valley dioptric power of each of the second valleys T2 in the third refractive correction area C6. In the sixth embodiment, PPS2 is defined as the peak dioptric power of the highest of the second peaks S2 in the third refractive correction area C6, and PPT2 is defined as the valley dioptric power of the lowest of the second valleys T2 in the third refractive correction area C6. PPS3 is a peak dioptric power of each of the third peaks S3 in the fourth refractive correction area D6. PPT3 is a valley dioptric power of each of the third valleys T3 in the fourth refractive correction area D6. In the sixth embodiment, PPS3 is defined as the peak dioptric power of the highest of the third peaks S3 in the fourth refractive correction area D6, and PPT3 is defined as the valley dioptric power of the lowest of the third valleys T3 in the fourth refractive correction area D6.

It could be seen from FIG. 6 that, in the sixth embodiment, the distance Z1 between the center point O and the boundary of the central optical area 10 is 1.0 mm. The distance Z2 between the boundary of the central optical area 10 and the boundary of the first annular optical area 20 is 1.0 mm. The distance Z3 between the boundary of the first annular optical area 20 and the boundary of the second annular optical area 30 is 1.0 mm. The distance Z4 between the boundary of the second annular optical area 30 and the boundary of the third annular optical area 40 is 1.0 mm. A total distance Z1+Z2+Z3+Z4 between the center point O of the central optical area 10 and the boundary of the third annular optical area 40 is 4.0 mm. The dioptric power PPSD of the first refractive correction area A6 is -1.00 D. The peak dioptric power PPS1 of the second refractive correction area B6 is -2.00 D. The valley dioptric power PPT1 of the second refractive correction area B6 is -3.00 D. The peak dioptric power PPS2 of the third refractive correction area C6 is 0.00 D. The valley dioptric power PPT2 of the third refractive correction area C6 is -1.00 D. The peak dioptric power PPS3 of the fourth refractive correction area D6 is 3.00 D. The valley dioptric power PPT3 of the fourth refractive correction area D6 is 2.00 D.

Therefore, based on detailed values of the aforementioned dioptric power profile, detailed values of the aforementioned conditions of the ophthalmic lens 600 in the sixth embodiment are as follows:
(1) $Z 1 + Z 2 + Z 3 + Z 4 = 4.0 mm ;$
(2) $Z 1 = 1.0 mm ;$
(3) $Z 2 = 1.0 mm ;$
(4) $Z 3 = 1.0 mm ;$
(5) $Z 4 = 1.0 mm ;$
(6) $PPSD = - 1.00 D ;$
(7) $PPSD - PPS 1 = 1.00 D ;$
(8) $PPS 1 - PPS 2 = - 2.00 D ;$
(9) $PPS 2 - PPS 3 = - 3.00 D ;$
(10)$\left|PPS1-PPT1\right| = 1.00 D ;$
(11) $\left|PPS2-PPT2\right| = 1.00 D ;$
(12) $\left|PPS3-PPT3\right| = 1.00 D .$

Therefore, in the sixth embodiment, the total distance Z1+Z2+Z3+Z4, the distance Z1, the distance Z2, the distance Z3, the distance Z4, the dioptric power PPSD, the peak dioptric power PPS1, the valley dioptric power PPT1, the peak dioptric power PPS2, the valley dioptric power PPT2, the peak dioptric power PPS3, and the valley dioptric power PPT3 satisfy the aforementioned conditions (1) to (12) of the ophthalmic lens 600. In addition, in the sixth embodiment, the dioptric power profile of the ophthalmic lens 600 decreases from the first refractive correction area A6 to the second refractive correction area B6. The dioptric power profile of the ophthalmic lens 600 gradually increases in the second refractive correction area B6, the third refractive correction area C6, and the fourth refractive correction area D6 in order of the first annular optical area 20, the second annular optical area 30, and the third annular optical area 40. A dioptric power of the third refractive correction area C6 and a dioptric power of the fourth refractive correction area D6 are greater than the dioptric power of the first refractive correction area A6. A difference I PPS1-PPT1 | between the peak dioptric power of the second refractive correction area B6 and the valley dioptric power of the second refractive correction area B6, a difference |PPS2-PPT2 | between the peak dioptric power of the third refractive correction area C6 and the valley dioptric power of the third refractive correction area C6, and a difference I PPS3-PPT3 | between the peak dioptric power of the fourth refractive correction area D6 and the valley dioptric power of the fourth refractive correction area D6 are identical. Therefore, through a multifocal power profile of the ophthalmic lens 600 and reducing a dioptric power difference between any two adjacent ones of the central optical area 10, the first annular optical area 20, the second annular optical area 30, and the third annular optical area 40, eyestrain of a user could be relieved and the user could easily wear the ophthalmic lens 600 with a clear vision.

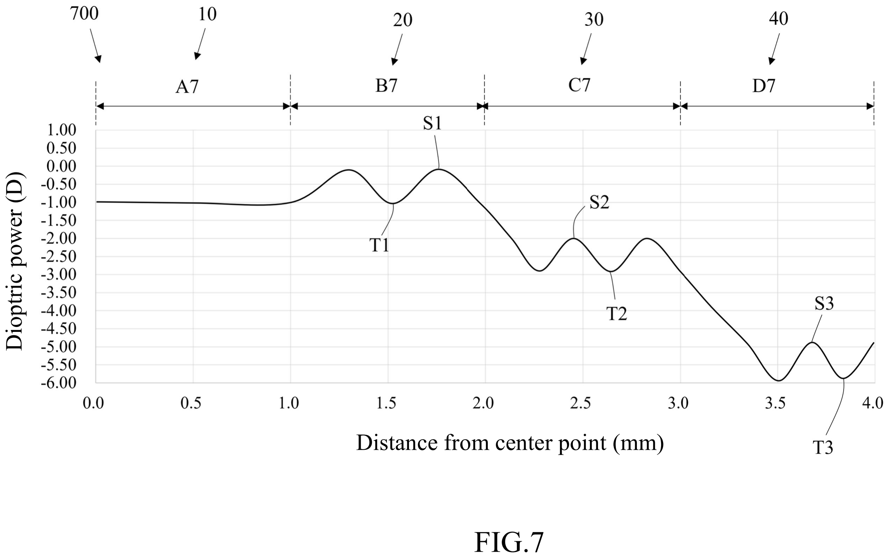

An ophthalmic lens 700 according to a seventh embodiment of the present invention is illustrated in FIG. 7 and includes a central optical area 10, a first annular optical area 20, a second annular optical area 30, and a third annular optical area 40. The central optical area 10, the first annular optical area 20, the second annular optical area 30, and the third annular optical area 40 of the seventh embodiment are identical to the central optical area 10, the first annular optical area 20, the second annular optical area 30, and the third annular optical area 40 of the first embodiment. In other words, in the seventh embodiment, the first annular optical area 20, the second annular optical area 30, and the third annular optical area 40 sequentially surround the central optical area 10.

The ophthalmic lens 700 is defined with a first refractive correction area A7, a second refractive correction area B7, a third refractive correction area C7, and a fourth refractive correction area D7, wherein the first refractive correction area A7, the second refractive correction area B7, the third refractive correction area C7, and the fourth refractive correction area D7 are selectively disposed in any of the central optical area 10, the first annular optical area 20, the second annular optical area 30, and the third annular optical area 40. The ophthalmic lens 700 has a dioptric power profile. Referring to a curve diagram of the dioptric power profile of the ophthalmic lens 700 in FIG.7, in the seventh embodiment, the first refractive correction area A7 is located in the central optical area 10. The second refractive correction area B7 is located in the first annular optical area 20. The third refractive correction area C7 is located in the second annular optical area 30. The fourth refractive correction area D7 is located in the third annular optical area 40. The dioptric power profile presents a horizontal line in the first refractive correction area A7. The dioptric power profile presents a wavy curve varying continuously in the second refractive correction area B7, the third refractive correction area C7, and the fourth refractive correction area D7. A plurality of peaks are formed in each of the second refractive correction area B7, the third refractive correction area C7, and the fourth refractive correction area D7. More specifically, the dioptric power profile has a plurality of first peaks S1 and a plurality of first valleys T1 in the second refractive correction area B7. The dioptric power profile has a plurality of second peaks S2 and a plurality of second valleys T2 in the third refractive correction area C7. The dioptric power profile has a plurality of third peaks S3 and a plurality of third valleys T3 in the fourth refractive correction area D7. In other embodiments, the dioptric power profile has at least one peak in each of the second refractive correction area B7, the third refractive correction area C7, and the fourth refractive correction area D7.

In the seventh embodiment, to ensure that the ophthalmic lens 700 could achieve a great vision correction effect, the ophthalmic lens 700 satisfies:
(1) $3.5 mm \leq Z 1 + Z 2 + Z 3 + Z 4 \leq 5.0 mm ;$
(2) $0.25 mm \leq Z 1 \leq 1.4 mm ;$
(3) $0.25 mm \leq Z 2 \leq 1.4 mm ;$
(4) $0.25 mm \leq Z 3 \leq 1.4 mm ;$
(5) $0.25 mm \leq Z 4 \leq 1.4 mm ;$
(6) $- 1.00 D \leq PPSD \leq 1.00 D ;$
(7) $- 2.00 D \leq PPSD - PPS 1 \leq 2.00 D ;$
(8) $- 3.00 D \leq PPS 1 - PPS 2 \leq 3.00 D ;$
(9) $- 4.00 D \leq PPS 2 - PPS 3 \leq 4.00 D ;$
(10) $1.00 D \leq \left|PPS1-PPT1\right| \leq 4.00 D ;$
(11) $1.00 D \leq \left|PPS2-PPT2\right| \leq 4.00 D ;$
(12) $1.00 D \leq \left|PPS3-PPT3\right| \leq 4.00 D .$

Z1 is a distance between the center point O and a boundary of the central optical area 10. Z2 is a distance between the boundary of the central optical area 10 and a boundary of the first annular optical area 20. Z3 is a distance between the boundary of the first annular optical area 20 and a boundary of the second annular optical area 30. Z4 is a distance between the boundary of the second annular optical area 30 and a boundary of the third annular optical area 40. PPSD is a dioptric power of the first refractive correction area A7. PPS1 is a peak dioptric power of each of the first peaks S1 in the second refractive correction area B7. PPT1 is a valley dioptric power of each of the first valleys T1 in the second refractive correction area B7. In the seventh embodiment, PPS1 is defined as the peak dioptric power of the highest of the first peaks S1 in the second refractive correction area B7, and PPT1 is defined as the valley dioptric power of the lowest of the first valleys T1 in the second refractive correction area B7. PPS2 is a peak dioptric power of each of the second peaks S2 in the third refractive correction area C7. PPT2 is a valley dioptric power of each of the second valleys T2 in the third refractive correction area C7. In the seventh embodiment, PPS2 is defined as the peak dioptric power of the highest of the second peaks S2 in the third refractive correction area C7, and PPT2 is defined as the valley dioptric power of the lowest of the second valleys T2 in the third refractive correction area C7. PPS3 is a peak dioptric power of each of the third peaks S3 in the fourth refractive correction area D7. PPT3 is a valley dioptric power of each of the third valleys T3 in the fourth refractive correction area D7. In the seventh embodiment, PPS3 is defined as the peak dioptric power of the highest of the third peaks S3 in the fourth refractive correction area D7, and PPT3 is defined as the valley dioptric power of the lowest of the third valleys T3 in the fourth refractive correction area D7.

It could be seen from FIG. 7 that, in the seventh embodiment, the distance Z1 between the center point O and the boundary of the central optical area 10 is 1.0 mm. The distance Z2 between the boundary of the central optical area 10 and the boundary of the first annular optical area 20 is 1.0 mm. The distance Z3 between the boundary of the first annular optical area 20 and the boundary of the second annular optical area 30 is 1.0 mm. The distance Z4 between the boundary of the second annular optical area 30 and the boundary of the third annular optical area 40 is 1.0 mm. A total distance Z1+Z2+Z3+Z4 between the center point O of the central optical area 10 and the boundary of the third annular optical area 40 is 4.0 mm. The dioptric power PPSD of the first refractive correction area A7 is -1.00 D. The peak dioptric power PPS1 of the second refractive correction area B7 is 0.00 D. The valley dioptric power PPT1 of the second refractive correction area B7 is -1.00 D. The peak dioptric power PPS2 of the third refractive correction area C7 is -2.00 D. The valley dioptric power PPT2 of the third refractive correction area C7 is -3.00 D. The peak dioptric power PPS3 of the fourth refractive correction area D7 is -5.00 D. The valley dioptric power PPT3 of the fourth refractive correction area D7 is -6.00 D.

Therefore, based on detailed values of the aforementioned dioptric power profile, detailed values of the aforementioned conditions of the ophthalmic lens 700 in the seventh embodiment are as follows:
(1) $Z 1 + Z 2 + Z 3 + Z 4 = 4.0 mm ;$
(2) $Z 1 = 1.0 mm ;$
(3) $Z 2 = 1.0 mm ;$
(4) $Z 3 = 1.0 mm ;$
(5) $Z 4 = 1.0 mm ;$
(6) $PPSD = - 1.00 D ;$
(7) $PPSD - PPS 1 = - 1.00 D ;$
(8) $PPS 1 - PPS 2 = 2.00 D ;$
(9) $PPS 2 - PPS 3 = 3.00 D ;$
(10) $\left|PPS1-PPT1\right| = 1.00 D ;$
(11) $\left|PPS2-PPT2\right| = 1.00 D ;$
(12) $\left|PPS3-PPT3\right| = 1.00 D .$

Therefore, in the seventh embodiment, the total distance Z1+Z2+Z3+Z4, the distance Z1, the distance Z2, the distance Z3, the distance Z4, the dioptric power PPSD, the peak dioptric power PPS1, the valley dioptric power PPT1, the peak dioptric power PPS2, the valley dioptric power PPT2, the peak dioptric power PPS3, and the valley dioptric power PPT3 satisfy the aforementioned conditions (1) to (12) of the ophthalmic lens 700. In addition, in the seventh embodiment, the dioptric power profile of the ophthalmic lens 700 increases from the first refractive correction area A7 to the second refractive correction area B7. The dioptric power profile of the ophthalmic lens 700 gradually decreases in the second refractive correction area B7, the third refractive correction area C7, and the fourth refractive correction area D7 in order of the first annular optical area 20, the second annular optical area 30, and the third annular optical area 40. A dioptric power of the third refractive correction area C7 and a dioptric power of the fourth refractive correction area D7 are less than the dioptric power of the first refractive correction area A7. A difference I PPS1-PPT1 | between the peak dioptric power of the second refractive correction area B7 and the valley dioptric power of the second refractive correction area B7, a difference |PPS2-PPT2 | between the peak dioptric power of the third refractive correction area C7 and the valley dioptric power of the third refractive correction area C7, and a difference I PPS3-PPT3 | between the peak dioptric power of the fourth refractive correction area D7 and the valley dioptric power of the fourth refractive correction area D7 are identical. Therefore, through a multifocal power profile of the ophthalmic lens 700 and reducing a dioptric power difference between any two adjacent ones of the central optical area 10, the first annular optical area 20, the second annular optical area 30, and the third annular optical area 40, eyestrain of a user could be relieved and the user could easily wear the ophthalmic lens 700 with a clear vision.

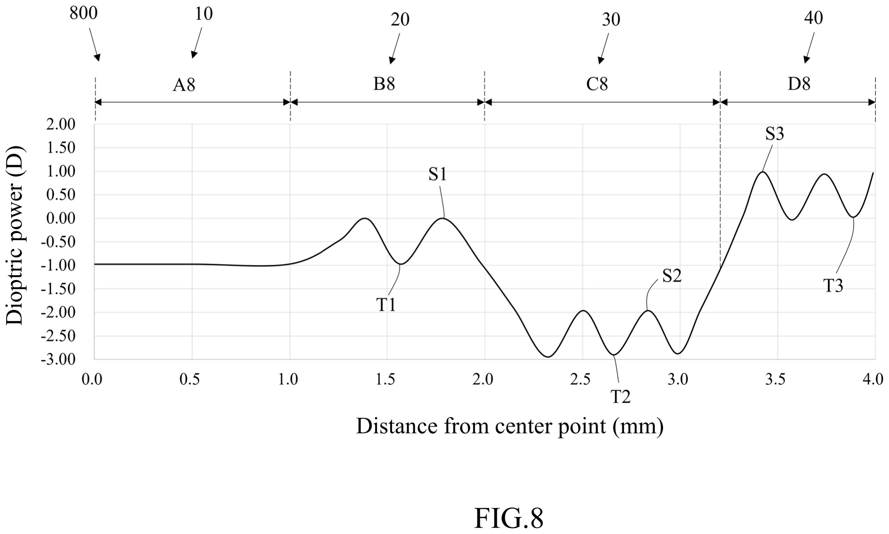

An ophthalmic lens 800 according to an eighth embodiment of the present invention is illustrated in FIG. 8 and includes a central optical area 10, a first annular optical area 20, a second annular optical area 30, and a third annular optical area 40. The central optical area 10, the first annular optical area 20, the second annular optical area 30, and the third annular optical area 40 of the eighth embodiment are identical to the central optical area 10, the first annular optical area 20, the second annular optical area 30, and the third annular optical area 40 of the first embodiment. In other words, in the eighth embodiment, the first annular optical area 20, the second annular optical area 30, and the third annular optical area 40 sequentially surround the central optical area 10.

The ophthalmic lens 800 is defined with a first refractive correction area A8, a second refractive correction area B8, a third refractive correction area C8, and a fourth refractive correction area D8, wherein the first refractive correction area A8, the second refractive correction area B8, the third refractive correction area C8, and the fourth refractive correction area D8 are selectively disposed in any of the central optical area 10, the first annular optical area 20, the second annular optical area 30, and the third annular optical area 40. The ophthalmic lens 800 has a dioptric power profile. Referring to a curve diagram of the dioptric power profile of the ophthalmic lens 800 in FIG.8, in the eighth embodiment, the first refractive correction area A8 is located in the central optical area 10. The second refractive correction area B8 is located in the first annular optical area 20. The third refractive correction area C8 is located in the second annular optical area 30. The fourth refractive correction area D8 is located in the third annular optical area 40. The dioptric power profile presents a horizontal line in the first refractive correction area A8. The dioptric power profile presents a wavy curve varying continuously in the second refractive correction area B8, third refractive correction area C8, and the fourth refractive correction area D8. A plurality of peaks are formed in each of the second refractive correction area B8, the third refractive correction area C8, and the fourth refractive correction area D8. More specifically, the dioptric power profile has a plurality of first peaks S1 and a plurality of first valleys T1 in the second refractive correction area B8. The dioptric power profile has a plurality of second peaks S2 and a plurality of second valleys T2 in the third refractive correction area C8. The dioptric power profile has a plurality of third peaks S3 and a plurality of third valleys T3 in the fourth refractive correction area D8. In other embodiments, the dioptric power profile has at least one peak in each of the second refractive correction area B8, the third refractive correction area C8, and the fourth refractive correction area D8.

In the eighth embodiment, to ensure that the ophthalmic lens 800 could achieve a great vision correction effect, the ophthalmic lens 800 satisfies:
(1) $3.5 mm \leq Z 1 + Z 2 + Z 3 + Z 4 \leq 5.0 mm ;$
(2) $0.25 mm \leq Z 1 \leq 1.4 mm ;$
(3) $0.25 mm \leq Z 2 \leq 1.4 mm ;$
(4) $0.25 mm \leq Z 3 \leq 1.4 mm ;$
(5) $0.25 mm \leq Z 4 \leq 1.4 mm ;$
(6) $- 1.00 D \leq PPSD \leq 1.00 D ;$
(7) $- 2.00 D \leq PPSD - PPS 1 \leq 2.00 D ;$
(8) $- 3.00 D \leq PPS 1 - PPS 2 \leq 3.00 D ;$
(9) $- 4.00 D \leq PPS 2 - PPS 3 \leq 4.00 D ;$
(10) $1.00 D \leq \left|PPS1-PPT1\right| \leq 4.00 D ;$
(11) $1.00 D \leq \left|PPS2-PPT2\right| \leq 4.00 D ;$
(12) $1.00 D \leq \left|PPS3-PPT3\right| \leq 4.00 D .$

Z1 is a distance between the center point O and a boundary of the central optical area 10. Z2 is a distance between the boundary of the central optical area 10 and a boundary of the first annular optical area 20. Z3 is a distance between the boundary of the first annular optical area 20 and a boundary of the second annular optical area 30. Z4 is a distance between the boundary of the second annular optical area 30 and a boundary of the third annular optical area 40. PPSD is a dioptric power of the first refractive correction area A8. PPS1 is a peak dioptric power of each of the first peaks S1 in the second refractive correction area B8. PPT1 is a valley dioptric power of each of the first valleys T1 in the second refractive correction area B8. In the eighth embodiment, PPS1 is defined as the peak dioptric power of the highest of the first peaks S1 in the second refractive correction area B8, and PPT1 is defined as the valley dioptric power of the lowest of the first valleys T1 in the second refractive correction area B8. PPS2 is a peak dioptric power of each of the second peaks S2 in the third refractive correction area C8. PPT2 is a valley dioptric power of each of the second valleys T2 in the third refractive correction area C8. In the eighth embodiment, PPS2 is defined as the peak dioptric power of the highest of the second peaks S2 in the third refractive correction area C8, and PPT2 is defined as the valley dioptric power of the lowest of the second valleys T2 in the third refractive correction area C8. PPS3 is a peak dioptric power of each of the third peaks S3 in the fourth refractive correction area D8. PPT3 is a valley dioptric power of each of the third valleys T3 in the fourth refractive correction area D8. In the eighth embodiment, PPS3 is defined as the peak dioptric power of the highest of the third peaks S3 in the fourth refractive correction area D8, and PPT3 is defined as the valley dioptric power of the lowest of the third valleys T3 in the fourth refractive correction area D8.

It could be seen from FIG. 8 that, in the eighth embodiment, the distance Z1 between the center point O and the boundary of the central optical area 10 is 1.0 mm. The distance Z2 between the boundary of the central optical area 10 and the boundary of the first annular optical area 20 is 1.0 mm. The distance Z3 between the boundary of the first annular optical area 20 and the boundary of the second annular optical area 30 is 1.2 mm. The distance Z4 between the boundary of the second annular optical area 30 and the boundary of the third annular optical area 40 is 0.8 mm. A total distance Z1+Z2+Z3+Z4 between the center point O of the central optical area 10 and the boundary of the third annular optical area 40 is 4.0 mm. The dioptric power PPSD of the first refractive correction area A8 is -1.00 D. The peak dioptric power PPS1 of the second refractive correction area B8 is 0.00 D. The valley dioptric power PPT1 of the second refractive correction area B8 is -1.00 D. The peak dioptric power PPS2 of the third refractive correction area C8 is -2.00 D. The valley dioptric power PPT2 of the third refractive correction area C8 is -3.00 D. The peak dioptric power PPS3 of the fourth refractive correction area D8 is 1.00 D. The valley dioptric power PPT3 of the fourth refractive correction area D8 is 0.00 D.

Therefore, based on detailed values of the aforementioned dioptric power profile, detailed values of the aforementioned conditions of the ophthalmic lens 800 in the eighth embodiment are as follows:
(1) $Z 1 + Z 2 + Z 3 + Z 4 = 4.0 mm ;$
(2) $Z 1 = 1.0 mm ;$
(3) $Z 2 = 1.0 mm ;$
(4) $Z 3 = 1.2 mm ;$
(5) $Z 4 = 0.8 mm ;$
(6) $PPSD = - 1.00 D ;$
(7) $PPSD - PPS 1 = - 1.00 D ;$
(8) $PPS 1 - PPS 2 = 2.00 D ;$
(9) $PPS 2 - PPS 3 = - 3.00 D ;$
(10) $\left|PPS1-PPT1\right| = 1.00 D ;$
(11) $\left|PPS2-PPT1\right| = 1.00 D ;$
(12) $\left|PPS3-PPT3\right| = 1.00 D .$

Therefore, in the eighth embodiment, the total distance Z1+Z2+Z3+Z4, the distance Z1, the distance Z2, the distance Z3, the distance Z4, the dioptric power PPSD, the peak dioptric power PPS1, the valley dioptric power PPT1, the peak dioptric power PPS2, the valley dioptric power PPT2, the peak dioptric power PPS3, and the valley dioptric power PPT3 satisfy the aforementioned conditions (1) to (12) of the ophthalmic lens 800. In addition, in the eighth embodiment, the dioptric power profile of the ophthalmic lens 800 increases from the first refractive correction area A8 to the second refractive correction area B8. The dioptric power profile of the ophthalmic lens 800 decreases from the second refractive correction area B8 to the third refractive correction area C8. A dioptric power of the third refractive correction area C8 is less than the dioptric power of the first refractive correction area A8. The dioptric power profile of the ophthalmic lens 800 increases from the third refractive correction area C8 to the fourth refractive correction area D8. A dioptric power of the fourth refractive correction area D8 is greater than a dioptric power of the second refractive correction area B8. A difference I PPS1-PPT1 | between the peak dioptric power of the second refractive correction area B8 and the valley dioptric power of the second refractive correction area B8, a difference I PPS2-PPT2 | between the peak dioptric power of the third refractive correction area C8 and the valley dioptric power of the third refractive correction area C8, and a difference |PPS3-PPT3 | between the peak dioptric power of the fourth refractive correction area D8 and the valley dioptric power of the fourth refractive correction area D8 are identical. Therefore, through a multifocal power profile of the ophthalmic lens 800 and reducing a dioptric power difference between any two adjacent ones of the central optical area 10, the first annular optical area 20, the second annular optical area 30, and the third annular optical area 40, eyestrain of a user could be relieved and the user could easily wear the ophthalmic lens 800 with a clear vision.

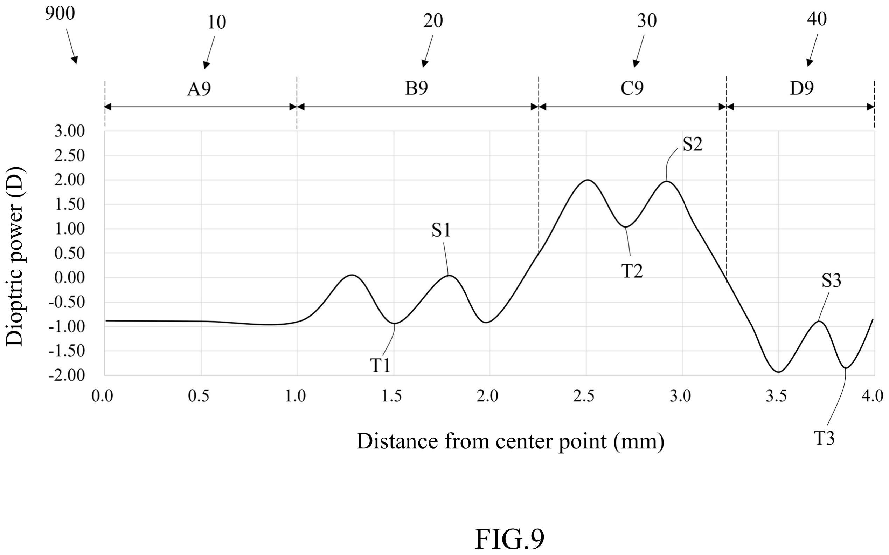

An ophthalmic lens 900 according to a ninth embodiment of the present invention is illustrated in FIG. 9 and includes a central optical area 10, a first annular optical area 20, a second annular optical area 30, and a third annular optical area 40. The central optical area 10, the first annular optical area 20, the second annular optical area 30, and the third annular optical area 40 of the ninth embodiment are identical to the central optical area 10, the first annular optical area 20, the second annular optical area 30, and the third annular optical area 40 of the first embodiment. In other words, in the ninth embodiment, the first annular optical area 20, the second annular optical area 30, and the third annular optical area 40 sequentially surround the central optical area 10.

The ophthalmic lens 900 is defined with a first refractive correction area A9, a second refractive correction area B9, a third refractive correction area C9, and a fourth refractive correction area D9, wherein the first refractive correction area A9, the second refractive correction area B9, the third refractive correction area C9, and the fourth refractive correction area D9 are selectively disposed in any of the central optical area 10, the first annular optical area 20, the second annular optical area 30, and the third annular optical area 40. The ophthalmic lens 900 has a dioptric power profile. Referring to a curve diagram of the dioptric power profile of the ophthalmic lens 900 in FIG. 9, in the ninth embodiment, the first refractive correction area A9 is located in the central optical area 10. The second refractive correction area B9 is located in the first annular optical area 20. The third refractive correction area C9 is located in the second annular optical area 30. The fourth refractive correction area D9 is located in the third annular optical area 40. The dioptric power profile presents a horizontal line in the first refractive correction area A9. The dioptric power profile presents a wavy curve varying continuously in the second refractive correction area B9, the third refractive correction area C9, and the fourth refractive correction area D9. A plurality of peaks are formed in each of the second refractive correction area B9, the third refractive correction area C9, and the fourth refractive correction area D9. More specifically, the dioptric power profile has a plurality of first peaks S1 and a plurality of first valleys T1 in the second refractive correction area B9. The dioptric power profile has a plurality of second peaks S2 and a plurality of second valleys T2 in the third refractive correction area C9. The dioptric power profile has a plurality of third peaks S3 and a plurality of third valleys T3 in the fourth refractive correction area D9. In other embodiments, the dioptric power profile has at least one peak in each of the second refractive correction area B9, the third refractive correction area C9, and the fourth refractive correction area D9.

In the ninth embodiment, to ensure that the ophthalmic lens 900 could achieve a great vision correction effect, the ophthalmic lens 900 satisfies:
(1) $3.5 mm \leq Z 1 + Z 2 + Z 3 + Z 4 \leq 5.0 mm ;$
(2) $0.25 mm \leq Z 1 \leq 1.4 mm ;$
(3) $0.25 mm \leq Z 2 \leq 1.4 mm ;$
(4) $0.25 mm \leq Z 3 \leq 1.4 mm ;$
(5) $0.25 mm \leq Z 4 \leq 1.4 mm ;$
(6) $- 1.00 D \leq PPSD \leq 1.00 D ;$
(7) $- 2.00 D \leq PPSD - PPS 1 \leq 2.00 D ;$
(8) $- 3.00 D \leq PPS 1 - PPS 2 \leq 3.00 D ;$
(9) $- 4.00 D \leq PPS 2 - PPS 3 \leq 4.00 D ;$
(10) $1.00 D \leq \left|PPS1-PPT1\right| \leq 4.00 D ;$
(11) $1.00 D \leq \left|PPS1-PPT2\right| \leq 4.00 D ;$
(12) $1.00 D \leq \left|PPS3-PPT3\right| \leq 4.00 D .$

Z1 is a distance between the center point O and a boundary of the central optical area 10. Z2 is a distance between the boundary of the central optical area 10 and a boundary of the first annular optical area 20. Z3 is a distance between the boundary of the first annular optical area 20 and a boundary of the second annular optical area 30. Z4 is a distance between the boundary of the second annular optical area 30 and a boundary of the third annular optical area 40. PPSD is a dioptric power of the first refractive correction area A9. PPS1 is a peak dioptric power of each of the first peaks S1 in the second refractive correction area B9. PPT1 is a valley dioptric power of each of the first valleys T1 in the second refractive correction area B9. In the ninth embodiment, PPS1 is defined as the peak dioptric power of the highest of the first peaks S1 in the second refractive correction area B9, and PPT1 is defined as the valley dioptric power of the lowest of the first valleys T1 in the second refractive correction area B9. PPS2 is a peak dioptric power of each of the second peaks S2 in the third refractive correction area C9. PPT2 is a valley dioptric power of each of the second valleys T2 in the third refractive correction area C9. In the ninth embodiment, PPS2 is defined as the peak dioptric power of the highest of the second peaks S2 in the third refractive correction area C9, and PPT2 is defined as the valley dioptric power of the lowest of the second valleys T2 in the third refractive correction area C9. PPS3 is a peak dioptric power of each of the third peaks S3 in the fourth refractive correction area D9. PPT3 is a valley dioptric power of each of the third valleys T3 in the fourth refractive correction area D9. In the ninth embodiment, PPS3 is defined as the peak dioptric power of the highest of the third peaks S3 in the fourth refractive correction area D9, and PPT3 is defined as the valley dioptric power of the lowest of the third valleys T3 in the fourth refractive correction area D9.

It could be seen from FIG. 9 that, in the ninth embodiment, the distance Z1 between the center point O and the boundary of the central optical area 10 is 1.0 mm. The distance Z2 between the boundary of the central optical area 10 and the boundary of the first annular optical area 20 is 1.2 mm. The distance Z3 between the boundary of the first annular optical area 20 and the boundary of the second annular optical area 30 is 1.0 mm. The distance Z4 between the boundary of the second annular optical area 30 and the boundary of the third annular optical area 40 is 0.8 mm. A total distance Z1+Z2+Z3+Z4 between the center point O of the central optical area 10 and the boundary of the third annular optical area 40 is 4.0 mm. The dioptric power PPSD of the first refractive correction area A9 is -1.00 D. The peak dioptric power PPS1 of the second refractive correction area B9 is 0.00 D. The valley dioptric power PPT1 of the second refractive correction area B9 is -1.00 D. The peak dioptric power PPS2 of the third refractive correction area C9 is 2.00 D. The valley dioptric power PPT2 of the third refractive correction area C9 is 1.00 D. The peak dioptric power PPS3 of the fourth refractive correction area D9 is -1.00 D. The valley dioptric power PPT3 of the fourth refractive correction area D9 is -2.00 D.

Therefore, based on detailed values of the aforementioned dioptric power profile, detailed values of the aforementioned conditions of the ophthalmic lens 900 in the ninth embodiment are as follows:
(1) $Z 1 + Z 2 + Z 3 + Z 4 = 4.0 mm ;$
(2) $Z 1 = 1.0 mm ;$
(3) $Z 2 = 1.2 mm ;$
(4) $Z 3 = 1.0 mm ;$
(5) $Z 4 = 0.8 mm ;$
(6) $PPSD = - 1.00 D ;$
(7) $PPSD - PPS 1 = - 1.00 D ;$
(8) $PPS 1 - PPS 2 = - 2.00 D ;$
(9) $PPS 2 - PPS 3 = 3.00 D ;$
(10) $\left|PPS1-PPT1\right| = 1.00 D ;$
(11) $\left|PPS2-PPT2\right| = 1.00 D ;$
(12) $\left|PPS3-PPT3\right| = 1.00 D .$

Therefore, in the ninth embodiment, the total distance Z1+Z2+Z3+Z4, the distance Z1, the distance Z2, the distance Z3, the distance Z4, the dioptric power PPSD, the peak dioptric power PPS1, the valley dioptric power PPT1, the peak dioptric power PPS2, the valley dioptric power PPT2, the peak dioptric power PPS3, and the valley dioptric power PPT3 satisfy the aforementioned conditions (1) to (12) of the ophthalmic lens 900. In addition, in the ninth embodiment, the dioptric power profile of the ophthalmic lens 900 gradually increases in the first refractive correction area A9, the second refractive correction area B9, and the third refractive correction area C9 in order of the central optical area 10, the first annular optical area 20, and the second annular optical area 30. The dioptric power profile of the ophthalmic lens 900 decreases from the third refractive correction area C9 to the fourth refractive correction area D9. The peak dioptric power of the fourth refractive correction area D9 is identical to the dioptric power of the first refractive correction area A9. A difference | PPS1-PPT1 | between the peak dioptric power of the second refractive correction area B9 and the valley dioptric power of the second refractive correction area B9, a difference | PPS2-PPT2 | between the peak dioptric power of the third refractive correction area C9 and the valley dioptric power of the third refractive correction area C9, and a difference | PPS3-PPT3 | between the peak dioptric power of the fourth refractive correction area D9 and the valley dioptric power of the fourth refractive correction area D9 are identical. Therefore, through a multifocal power profile of the ophthalmic lens 900 and reducing a dioptric power difference between any two adjacent ones of the central optical area 10, the first annular optical area 20, the second annular optical area 30, and the third annular optical area 40, eyestrain of a user could be relieved and the user could easily wear the ophthalmic lens 900 with a clear vision.

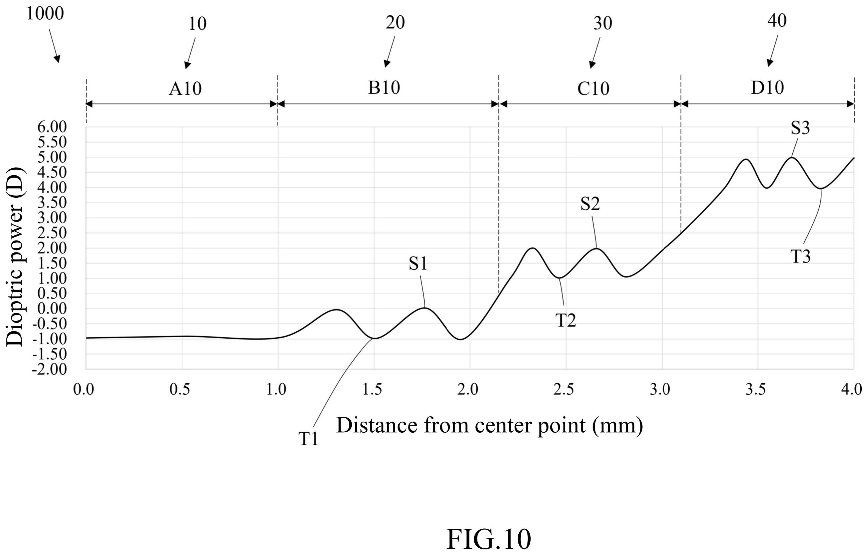

An ophthalmic lens 1000 according to a tenth embodiment of the present invention is illustrated in FIG. 10 and includes a central optical area 10, a first annular optical area 20, a second annular optical area 30, and a third annular optical area 40. The central optical area 10, the first annular optical area 20, the second annular optical area 30, and the third annular optical area 40 of the tenth embodiment are identical to the central optical area 10, the first annular optical area 20, the second annular optical area 30, and the third annular optical area 40 of the first embodiment. In other words, in the tenth embodiment, the first annular optical area 20, the second annular optical area 30, and the third annular optical area 40 sequentially surround the central optical area 10.

The ophthalmic lens 1000 is defined with a first refractive correction area A10, a second refractive correction area B10, a third refractive correction area C10, and a fourth refractive correction area D10, wherein the first refractive correction area A10, the second refractive correction area B10, the third refractive correction area C10, and the fourth refractive correction area D10 are selectively disposed in any of the central optical area 10, the first annular optical area 20, the second annular optical area 30, and the third annular optical area 40. The ophthalmic lens 1000 has a dioptric power profile. Referring to a curve diagram of the dioptric power profile of the ophthalmic lens 1000 in FIG. 10, in the tenth embodiment, the first refractive correction area A10 is located in the central optical area 10. The second refractive correction area B10 is located in the first annular optical area 20. The third refractive correction area C10 is located in the second annular optical area 30. The fourth refractive correction area D10 is located in the third annular optical area 40. The dioptric power profile presents a horizontal line in the first refractive correction area A10. The dioptric power profile presents a wavy curve varying continuously in the second refractive correction area B10, the third refractive correction area C10, and the fourth refractive correction area D10. A plurality of peaks are formed in each of the second refractive correction area B10, the third refractive correction area C10, and the fourth refractive correction area D10. More specifically, the dioptric power profile has a plurality of first peaks S1 and a plurality of first valleys T1 in the second refractive correction area B10. The dioptric power profile has a plurality of second peaks S2 and a plurality of second valleys T2 in the third refractive correction area C10. The dioptric power profile has a plurality of third peaks S3 and a plurality of third valleys T3 in the fourth refractive correction area D10. In other embodiments, the dioptric power profile has at least one peak in each of the second refractive correction area B10, the third refractive correction area C10, and the fourth refractive correction area D10.

In the tenth embodiment, to ensure that the ophthalmic lens 1000 could achieve a great vision correction effect, the ophthalmic lens 1000 satisfies:
(1) $3.5 mm \leq Z 1 + Z 2 + Z 3 + Z 4 \leq 5.0 mm ;$
(2) $0.25 mm \leq Z 1 \leq 1.4 mm ;$
(3) $0.25 mm \leq Z 2 \leq 1.4 mm ;$
(4) $0.25 mm \leq Z 3 \leq 1.4 mm ;$
(5) $0.25 mm \leq Z 4 \leq 1.4 mm ;$
(6) $- 1.00 D \leq PPSD \leq 1.00 D ;$
(7) $- 2.00 D \leq PPSD - PPS 1 \leq 2.00 D ;$
(8) $- 3.00 D \leq PPS 1 - PPS 2 \leq 3.00 D ;$
(9) $- 4.00 D \leq PPS 2 - PPS 3 \leq 4.00 D ;$
(10) $1.00 D \leq \left|PPS1-PPT1\right| \leq 4.00 D ;$
(11) $1.00 D \leq \left|PPS2-PPT2\right| \leq 4.00 D ;$
(12) $1.00 D \leq \left|PPS3-PPT3\right| \leq 4.00 D .$

Z1 is a distance between the center point O and a boundary of the central optical area 10. Z2 is a distance between the boundary of the central optical area 10 and a boundary of the first annular optical area 20. Z3 is a distance between the boundary of the first annular optical area 20 and a boundary of the second annular optical area 30. Z4 is a distance between the boundary of the second annular optical area 30 and a boundary of the third annular optical area 40. PPSD is a dioptric power of the first refractive correction area A10. PPS1 is a peak dioptric power of each of the first peaks S1 in the second refractive correction area B10. PPT1 is a valley dioptric power of each of the first valleys T1 in the second refractive correction area B10. In the tenth embodiment, PPS1 is defined as the peak dioptric power of the highest of the first peaks S1 in the second refractive correction area B10, and PPT1 is defined as the valley dioptric power of the lowest of the first valleys T1 in the second refractive correction area B10. PPS2 is a peak dioptric power of each of the second peaks S2 in the third refractive correction area C10. PPT2 is a valley dioptric power of each of the second valleys T2 in the third refractive correction area C10. In the tenth embodiment, PPS2 is defined as the peak dioptric power of the highest of the second peaks S2 in the third refractive correction area C10, and PPT2 is defined as the valley dioptric power of the lowest of the second valleys T2 in the third refractive correction area C10. PPS3 is a peak dioptric power of each of the third peaks S3 in the fourth refractive correction area D10. PPT3 is a valley dioptric power of each of the third valleys T3 in the fourth refractive correction area D10. In the tenth embodiment, PPS3 is defined as the peak dioptric power of the highest of the third peaks S3 in the fourth refractive correction area D10, and PPT3 is defined as the valley dioptric power of the lowest of the third valleys T3 in the fourth refractive correction area D10.

It could be seen from FIG. 10 that, in the tenth embodiment, the distance Z1 between the center point O and the boundary of the central optical area 10 is 1.0 mm. The distance Z2 between the boundary of the central optical area 10 and the boundary of the first annular optical area 20 is 1.1 mm. The distance Z3 between the boundary of the first annular optical area 20 and the boundary of the second annular optical area 30 is 1.0 mm. The distance Z4 between the boundary of the second annular optical area 30 and the boundary of the third annular optical area 40 is 0.9 mm. A total distance Z1+Z2+Z3+Z4 between the center point O of the central optical area 10 and the boundary of the third annular optical area 40 is 4.0 mm. The dioptric power PPSD of the first refractive correction area A10 is -1.00 D. The peak dioptric power PPS1 of the second refractive correction area B10 is 0.00 D. The valley dioptric power PPT1 of the second refractive correction area B10 is -1.00 D. The peak dioptric power PPS2 of the third refractive correction area C10 is 2.00 D. The valley dioptric power PPT2 of the third refractive correction area C10 is 1.00 D. The peak dioptric power PPS3 of the fourth refractive correction area D10 is 5.00 D. The valley dioptric power PPT3 of the fourth refractive correction area D10 is 4.00 D.

Therefore, based on detailed values of the aforementioned dioptric power profile, detailed values of the aforementioned conditions of the ophthalmic lens 1000 in the tenth embodiment are as follows:
(1) $Z 1 + Z 2 + Z 3 + Z 4 = 4.0 mm ;$
(2) $Z 1 = 1.0 mm ;$
(3) $Z 2 = 1.1 mm ;$
(4) $Z 3 = 1.0 mm ;$
(5) $Z 4 = 0.9 mm ;$
(6) $PPSD = - 1.00 D ;$
(7) $PPSD - PPS 1 = - 1.00 D ;$
(8) $PPS 1 - PPS 2 = - 2.00 D ;$
(9) $PPS 2 - PPS 3 = - 3.00 D ;$
(10) $\left|PPS1-PPT1\right| = 1.00 D ;$
(11) $\left|PPS2-PPT2\right| = 1.00 D ;$
(12) $\left|PPS3-PPT3\right| = 1.00 D .$

Therefore, in the tenth embodiment, the total distance Z1+Z2+Z3+Z4, the distance Z1, the distance Z2, the distance Z3, the distance Z4, the dioptric power PPSD, the peak dioptric power PPS1, the valley dioptric power PPT1, the peak dioptric power PPS2, the valley dioptric power PPT2, the peak dioptric power PPS3, and the valley dioptric power PPT3 satisfy the aforementioned conditions (1) to (12) of the ophthalmic lens 1000. In addition, in the tenth embodiment, the dioptric power profile of the ophthalmic lens 1000 gradually increases in the first refractive correction area A10, the second refractive correction area B10, the third refractive correction area C10, and the fourth refractive correction area D10 in order of the central optical area 10, the first annular optical area 20, the second annular optical area 30, and the third annular optical area 40. A difference | PPS1-PPT1 | between the peak dioptric power of the second refractive correction area B10 and the valley dioptric power of the second refractive correction area B10, a difference | PPS2-PPT2 | between the peak dioptric power of the third refractive correction area C10 and the valley dioptric power of the third refractive correction area C10, and a difference | PPS3-PPT3 | between the peak dioptric power of the fourth refractive correction area D10 and the valley dioptric power of the fourth refractive correction area D10 are identical. Therefore, through a multifocal power profile of the ophthalmic lens 1000 and reducing a dioptric power difference between any two adjacent ones of the central optical area 10, the first annular optical area 20, the second annular optical area 30, and the third annular optical area 40, eyestrain of a user could be relieved and the user could easily wear the ophthalmic lens 1000 with a clear vision.

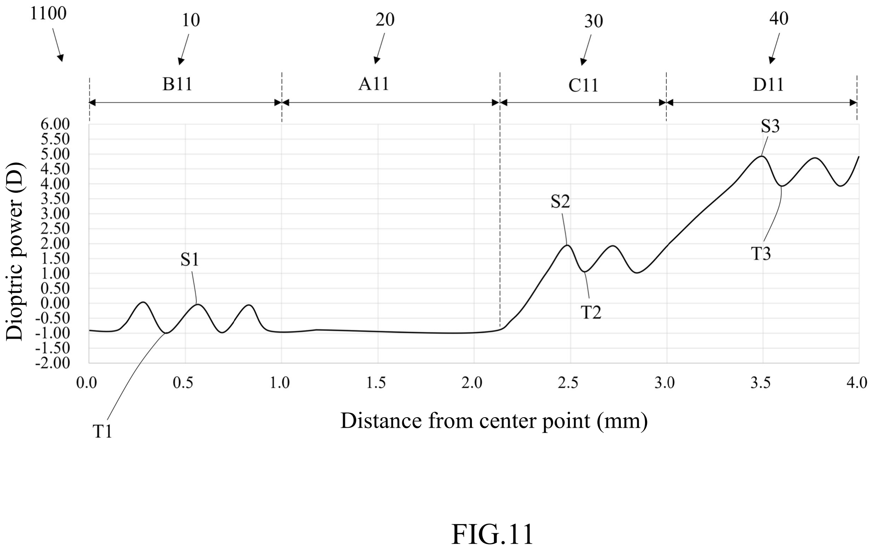

An ophthalmic lens 1100 according to an eleventh embodiment of the present invention is illustrated in FIG. 11 and includes a central optical area 10, a first annular optical area 20, a second annular optical area 30, and a third annular optical area 40. The central optical area 10, the first annular optical area 20, the second annular optical area 30, and the third annular optical area 40 of the eleventh embodiment are identical to the central optical area 10, the first annular optical area 20, the second annular optical area 30, and the third annular optical area 40 of the first embodiment. In other words, in the eleventh embodiment, the first annular optical area 20, the second annular optical area 30, and the third annular optical area 40 sequentially surround the central optical area 10.

The ophthalmic lens 1100 is defined with a first refractive correction area A11, a second refractive correction area B11, a third refractive correction area C11, and a fourth refractive correction area D11, wherein the first refractive correction area A11, the second refractive correction area B11, the third refractive correction area C11, and the fourth refractive correction area D11 are selectively disposed in any of the central optical area 10, the first annular optical area 20, the second annular optical area 30, and the third annular optical area 40. The ophthalmic lens 1100 has a dioptric power profile. Referring to a curve diagram of the dioptric power profile of the ophthalmic lens 1100 in FIG. 11, in the eleventh embodiment, the first refractive correction area A11 is located in the first annular optical area 20. The second refractive correction area B11 is located in the central optical area 10. The third refractive correction area C11 is located in the second annular optical area 30. The fourth refractive correction area D11 is located in the third annular optical area 40. The dioptric power profile presents a horizontal line in the first refractive correction area A11. The dioptric power profile presents a wavy curve varying continuously in the second refractive correction area B11, the third refractive correction area C11, and the fourth refractive correction area D11. A plurality of peaks are formed in each of the second refractive correction area B11, the third refractive correction area C11, and the fourth refractive correction area D11. More specifically, the dioptric power profile has a plurality of first peaks S1 and a plurality of first valleys T1 in the second refractive correction area B11. The dioptric power profile has a plurality of second peaks S2 and a plurality of second valleys T2 in the third refractive correction area C11. The dioptric power profile has a plurality of third peaks S3 and a plurality of third valleys T3 in the fourth refractive correction area D11. In other embodiments, the dioptric power profile has at least one peak in each of the second refractive correction area B11, the third refractive correction area C11, and the fourth refractive correction area D11.

In the eleventh embodiment, to ensure that the ophthalmic lens 1100 could achieve a great vision correction effect, the ophthalmic lens 1100 satisfies:
(1) $3.5 mm \leq Z 1 + Z 2 + Z 3 + Z 4 \leq 5.0 mm ;$
(2) $0.25 mm \leq Z 1 \leq 1.4 mm ;$
(3) $0.25 mm \leq Z 2 \leq 1.4 mm ;$
(4) $0.25 mm \leq Z 3 \leq 1.4 mm ;$
(5) $0.25 mm \leq Z 4 \leq 1.4 mm ;$
(6) $- 1.00 D \leq PPSD \leq 1.00 D ;$
(7) $- 2.00 D \leq PPSD - PPS 1 \leq 2.00 D ;$
(8) $- 3.00 D \leq PPS 1 - PPS 2 \leq 3.00 D ;$
(9) $- 4.00 D \leq PPS 2 - PPS 3 \leq 4.00 D ;$
(10) $1.00 D \leq \left|PPS1-PPT1\right| \leq 4.00 D ;$
(11) $1.00 D \leq \left|PPS2-PPT2\right| \leq 4.00 D ;$
(12) $1.00 D \leq \left|PPS3-PPT3\right| \leq 4.00 D .$

Z1 is a distance between the center point O and a boundary of the central optical area 10. Z2 is a distance between the boundary of the central optical area 10 and a boundary of the first annular optical area 20. Z3 is a distance between the boundary of the first annular optical area 20 and a boundary of the second annular optical area 30. Z4 is a distance between the boundary of the second annular optical area 30 and a boundary of the third annular optical area 40. PPSD is a dioptric power of the first refractive correction area A11. PPS1 is a peak dioptric power of each of the first peaks S1 in the second refractive correction area B11. PPT1 is a valley dioptric power of each of the first valleys T1 in the second refractive correction area B11. In the eleventh embodiment, PPS1 is defined as the peak dioptric power of the highest of the first peaks S1 in the second refractive correction area B11, and PPT1 is defined as the valley dioptric power of the lowest of the first valleys T1 in the second refractive correction area B11. PPS2 is a peak dioptric power of each of the second peaks S2 in the third refractive correction area C11. PPT2 is a valley dioptric power of each of the second valleys T2 in the third refractive correction area C11. In the eleventh embodiment, PPS2 is defined as the peak dioptric power of the highest of the second peaks S2 in the third refractive correction area C11, and PPT2 is defined as the valley dioptric power of the lowest of the second valleys T2 in the third refractive correction area C11. PPS3 is a peak dioptric power of each of the third peaks S3 in the fourth refractive correction area D11. PPT3 is a valley dioptric power of each of the third valleys T3 in the fourth refractive correction area D11. In the eleventh embodiment, PPS3 is defined as the peak dioptric power of the highest of the third peaks S3 in the fourth refractive correction area D11, and PPT3 is defined as the valley dioptric power of the lowest of the third valleys T3 in the fourth refractive correction area D11.

It could be seen from FIG. 11 that, in the eleventh embodiment, the distance Z1 between the center point O and the boundary of the central optical area 10 is 1.0 mm. The distance Z2 between the boundary of the central optical area 10 and the boundary of the first annular optical area 20 is 1.1 mm. The distance Z3 between the boundary of the first annular optical area 20 and the boundary of the second annular optical area 30 is 0.9 mm. The distance Z4 between the boundary of the second annular optical area 30 and the boundary of the third annular optical area 40 is 1.0 mm. A total distance Z1+Z2+Z3+Z4 between the center point O of the central optical area 10 and the boundary of the third annular optical area 40 is 4.0 mm. The dioptric power PPSD of the first refractive correction area A11 is -1.00 D. The peak dioptric power PPS1 of the second refractive correction area B11 is 0.00 D. The valley dioptric power PPT1 of the second refractive correction area B11 is -1.00 D. The peak dioptric power PPS2 of the third refractive correction area C11 is 2.00 D. The valley dioptric power PPT2 of the third refractive correction area C11 is 1.00 D. The peak dioptric power PPS3 of the fourth refractive correction area D11 is 5.00 D. The valley dioptric power PPT3 of the fourth refractive correction area D11 is 4.00 D.

Therefore, based on detailed values of the aforementioned dioptric power profile, detailed values of the aforementioned conditions of the ophthalmic lens 1100 in the eleventh embodiment are as follows:
(1) $Z 1 + Z 2 + Z 3 + Z 4 = 4.0 mm ;$
(2) $Z 1 = 1.0 mm ;$
(3) $Z 2 = 1.1 mm ;$
(4) $Z 3 = 0.9 mm ;$
(5) $Z 4 = 1.0 mm ;$
(6) $PPSD = - 1.00 D ;$
(7) $PPSD - PPS 1 = - 1.00 D ;$
(8) $PPS 1 - PPS 2 = - 2.00 D ;$
(9) $PPS 2 - PPS 3 = - 3.00 D ;$
(10) $\left|PPS1-PPT1\right| = 1.00 D ;$
(11) $\left|PPS2-PPT2\right| = 1.00 D ;$
(12) $\left|PPS3-PPT3\right| = 1.00 D .$

Therefore, in the eleventh embodiment, the total distance Z1+Z2+Z3+Z4, the distance Z1, the distance Z2, the distance Z3, the distance Z4, the dioptric power PPSD, the peak dioptric power PPS1, the valley dioptric power PPT1, the peak dioptric power PPS2, the valley dioptric power PPT2, the peak dioptric power PPS3, and the valley dioptric power PPT3 satisfy the aforementioned conditions (1) to (12) of the ophthalmic lens 1100. In addition, in the eleventh embodiment, the second refractive correction area B11 and the third refractive correction area C11 are respectively arranged on two sides of the first refractive correction area A11. A dioptric power of the second refractive correction area B11 and a dioptric power of the third refractive correction area C11 are greater than the dioptric power of the first refractive correction area A11. The dioptric power profile of the ophthalmic lens 1100 gradually increases in the first refractive correction area A11, the third refractive correction area C11, and the fourth refractive correction area D11 in order of the first annular optical area 20, the second annular optical area 30, and the third annular optical area 40. The dioptric power of the third refractive correction area C11 and a dioptric power of the fourth refractive correction area D11 are greater than the dioptric power of the second refractive correction area B11. A difference | PPS1-PPT1 | between the peak dioptric power of the second refractive correction area B11 and the valley dioptric power of the second refractive correction area B11, a difference | PPS2-PPT2 | between the peak dioptric power of the third refractive correction area C11 and the valley dioptric power of the third refractive correction area C11, and a difference | PPS3-PPT3 | between the peak dioptric power of the fourth refractive correction area D11 and the valley dioptric power of the fourth refractive correction area D11 are identical. Therefore, through a multifocal power profile of the ophthalmic lens 1100 and reducing a dioptric power difference between any two adjacent ones of the central optical area 10, the first annular optical area 20, the second annular optical area 30, and the third annular optical area 40, eyestrain of a user could be relieved and the user could easily wear the ophthalmic lens 1100 with a clear vision.

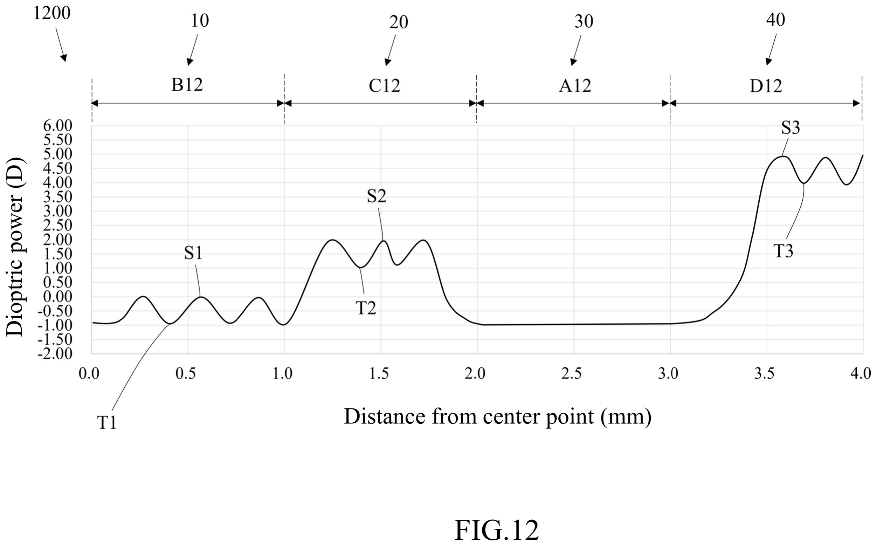

An ophthalmic lens 1200 according to a twelfth embodiment of the present invention is illustrated in FIG. 12 and includes a central optical area 10, a first annular optical area 20, a second annular optical area 30, and a third annular optical area 40. The central optical area 10, the first annular optical area 20, the second annular optical area 30, and the third annular optical area 40 of the twelfth embodiment are identical to the central optical area 10, the first annular optical area 20, the second annular optical area 30, and the third annular optical area 40 of the first embodiment. In other words, in the twelfth embodiment, the first annular optical area 20, the second annular optical area 30, and the third annular optical area 40 sequentially surround the central optical area 10.

The ophthalmic lens 1200 is defined with a first refractive correction area A12, a second refractive correction area B12, a third refractive correction area C12, and a fourth refractive correction area D12, wherein the first refractive correction area A12, the second refractive correction area B12, the third refractive correction area C12, and the fourth refractive correction area D12 are selectively disposed in any of the central optical area 10, the first annular optical area 20, the second annular optical area 30, and the third annular optical area 40. The ophthalmic lens 1200 has a dioptric power profile. Referring to a curve diagram of the dioptric power profile of the ophthalmic lens 1200 in FIG. 12, in the twelfth embodiment, the first refractive correction area A12 is located in the second annular optical area 30. The second refractive correction area B12 is located in the central optical area 10. The third refractive correction area C12 is located in the first annular optical area 20. The fourth refractive correction area D12 is located in the third annular optical area 40. The dioptric power profile presents a horizontal line in the first refractive correction area A12. The dioptric power profile presents a wavy curve varying continuously in the second refractive correction area B12, the third refractive correction area C12, and the fourth refractive correction area D12. A plurality of peaks are formed in each of the second refractive correction area B12, the third refractive correction area C12, and the fourth refractive correction area D12. More specifically, the dioptric power profile has a plurality of first peaks S1 and a plurality of first valleys T1 in the second refractive correction area B12. The dioptric power profile has a plurality of second peaks S2 and a plurality of second valleys T2 in the third refractive correction area C12. The dioptric power profile has a plurality of third peaks S3 and a plurality of third valleys T3 in the fourth refractive correction area D12. In other embodiments, the dioptric power profile has at least one peak in each of the second refractive correction area B12, the third refractive correction area C12, and the fourth refractive correction area D12.

In the twelfth embodiment, to ensure that the ophthalmic lens 1200 could achieve a great vision correction effect, the ophthalmic lens 1200 satisfies:
(1) $3.5 mm \leq Z 1 + Z 2 + Z 3 + Z 4 \leq 5.0 mm ;$
(2) $0.25 mm \leq Z 1 \leq 1.4 mm ;$
(3) $0.25 mm \leq Z 2 \leq 1.4 mm ;$
(4) $0.25 mm \leq Z 3 \leq 1.4 mm ;$
(5) $0.25 mm \leq Z 4 \leq 1.4 mm ;$
(6) $- 1.00 D \leq PPSD \leq 1.00 D ;$
(7) $- 2.00 D \leq PPSD - PPS 1 \leq 2.00 D ;$
(8) $- 3.00 D \leq PPS 1 - PPS 2 \leq 3.00 D ;$
(9) $- 4.00 D \leq PPS 2 - PPS 3 \leq 4.00 D ;$
(10) $1.00 D \leq \left|PPS1-PPT1\right| \leq 4.00 D ;$
(11) $1.00 D \leq \left|PPS2-PPT2\right| \leq 4.00 D ;$
(12) $1.00 D \leq \left|PPS3-PPT3\right| \leq 4.00 D .$

Z1 is a distance between the center point O and a boundary of the central optical area 10. Z2 is a distance between the boundary of the central optical area 10 and a boundary of the first annular optical area 20. Z3 is a distance between the boundary of the first annular optical area 20 and a boundary of the second annular optical area 30. Z4 is a distance between the boundary of the second annular optical area 30 and a boundary of the third annular optical area 40. PPSD is a dioptric power of the first refractive correction area A12. PPS1 is a peak dioptric power of each of the first peaks S1 in the second refractive correction area B12. PPT1 is a valley dioptric power of each of the first valleys T1 in the second refractive correction area B12. In the twelfth embodiment, PPS1 is defined as the peak dioptric power of the highest of the first peaks S1 in the second refractive correction area B12, and PPT1 is defined as the valley dioptric power of the lowest of the first valleys T1 in the second refractive correction area B12. PPS2 is a peak dioptric power of each of the second peaks S2 in the third refractive correction area C12. PPT2 is a valley dioptric power of each of the second valleys T2 in the third refractive correction area C12. In the twelfth embodiment, PPS2 is defined as the peak dioptric power of the highest of the second peaks S2 in the third refractive correction area C12, and PPT2 is defined as the valley dioptric power of the lowest of the second valleys T2 in the third refractive correction area C12. PPS3 is a peak dioptric power of each of the third peaks S3 in the fourth refractive correction area D12. PPT3 is a valley dioptric power of each of the third valleys T3 in the fourth refractive correction area D12. In the twelfth embodiment, PPS3 is defined as the peak dioptric power of the highest of the third peaks S3 in the fourth refractive correction area D12, and PPT3 is defined as the valley dioptric power of the lowest of the third valleys T3 in the fourth refractive correction area D12.

It could be seen from FIG. 12 that, in the twelfth embodiment, the distance Z1 between the center point O and the boundary of the central optical area 10 is 1.0 mm. The distance Z2 between the boundary of the central optical area 10 and the boundary of the first annular optical area 20 is 1.0 mm. The distance Z3 between the boundary of the first annular optical area 20 and the boundary of the second annular optical area 30 is 1.0 mm. The distance Z4 between the boundary of the second annular optical area 30 and the boundary of the third annular optical area 40 is 1.0 mm. A total distance Z1+Z2+Z3+Z4 between the center point O of the central optical area 10 and the boundary of the third annular optical area 40 is 4.0 mm. The dioptric power PPSD of the first refractive correction area A12 is -1.00 D. The peak dioptric power PPS1 of the second refractive correction area B12 is 0.00 D. The valley dioptric power PPT1 of the second refractive correction area B12 is -1.00 D. The peak dioptric power PPS2 of the third refractive correction area C12 is 2.00 D. The valley dioptric power PPT2 of the third refractive correction area C12 is 1.00 D. The peak dioptric power PPS3 of the fourth refractive correction area D12 is 5.00 D. The valley dioptric power PPT3 of the fourth refractive correction area D12 is 4.00 D.

Therefore, based on detailed values of the aforementioned dioptric power profile, detailed values of the aforementioned conditions of the ophthalmic lens 1200 in the twelfth embodiment are as follows:
(1) $Z 1 + Z 2 + Z 3 + Z 4 = 4.0 mm ;$
(2) $Z 1 = 1.0 mm ;$
(3) $Z 2 = 1.0 mm ;$
(4) $Z 3 = 1.0 mm ;$
(5) $Z 4 = 1.0 mm ;$
(6) $PPSD = - 1.00 D ;$
(7) $PPSD - PPS 1 = - 1.00 D ;$
(8) $PPS 1 - PPS 2 = - 2.00 D ;$
(9) $PPS 2 - PPS 3 = - 3.00 D ;$
(10) $\left|PPS1-PPT1\right| = 1.00 D ;$
(11) $\left|PPS2-PPT2\right| = 1.00 D ;$
(12) $\left|PPS3-PPT3\right| = 1.00 D .$

Therefore, in the twelfth embodiment, the total distance Z1+Z2+Z3+Z4, the distance Z1, the distance Z2, the distance Z3, the distance Z4, the dioptric power PPSD, the peak dioptric power PPS1, the valley dioptric power PPT1, the peak dioptric power PPS2, the valley dioptric power PPT2, the peak dioptric power PPS3, and the valley dioptric power PPT3 satisfy the aforementioned conditions (1) to (12) of the ophthalmic lens 1200. In addition, in the twelfth embodiment, the third refractive correction area C12 and the fourth refractive correction area D12 are respectively arranged on two sides of the first refractive correction area A12. A dioptric power of the second refractive correction area B12, a dioptric power of the third refractive correction area C12, and a dioptric power of the fourth refractive correction area D12 are greater than the dioptric power of the first refractive correction area A12. The dioptric power of the third refractive correction area C12 and the dioptric power of the fourth refractive correction area D12 are greater than the dioptric power of the second refractive correction area B12. A difference | PPS1-PPT1 | between the peak dioptric power of the second refractive correction area B12 and the valley dioptric power of the second refractive correction area B12, a difference | PPS2-PPT2 | between the peak dioptric power of the third refractive correction area C12 and the valley dioptric power of the third refractive correction area C12, and a difference | PPS3-PPT3 | between the peak dioptric power of the fourth refractive correction area D12 and the valley dioptric power of the fourth refractive correction area D12 are identical. Therefore, through a multifocal power profile of the ophthalmic lens 1200 and reducing a dioptric power difference between any two adjacent ones of the central optical area 10, the first annular optical area 20, the second annular optical area 30, and the third annular optical area 40, eyestrain of a user could be relieved and the user could easily wear the ophthalmic lens 1200 with a clear vision.

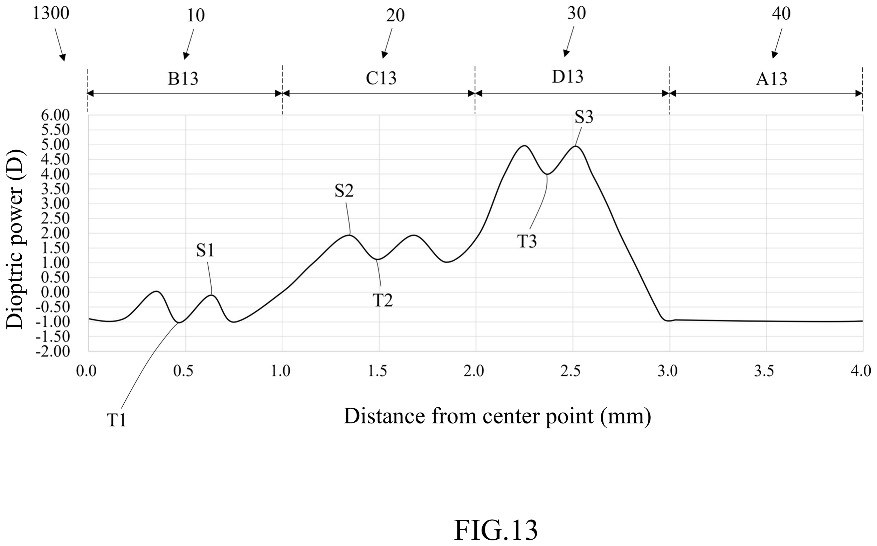

An ophthalmic lens 1300 according to a thirteenth embodiment of the present invention is illustrated in FIG. 13 and includes a central optical area 10, a first annular optical area 20, a second annular optical area 30, and a third annular optical area 40. The central optical area 10, the first annular optical area 20, the second annular optical area 30, and the third annular optical area 40 of the thirteenth embodiment are identical to the central optical area 10, the first annular optical area 20, the second annular optical area 30, and the third annular optical area 40 of the first embodiment. In other words, in the thirteenth embodiment, the first annular optical area 20, the second annular optical area 30, and the third annular optical area 40 sequentially surround the central optical area 10.

The ophthalmic lens 1300 is defined with a first refractive correction area A13, second refractive correction area B13, a third refractive correction area C13, and a fourth refractive correction area D13, wherein the first refractive correction area A13, the second refractive correction area B13, the third refractive correction area C13, and the fourth refractive correction area D13 are selectively disposed in any of the central optical area 10, the first annular optical area 20, the second annular optical area 30, and the third annular optical area 40. The ophthalmic lens 1300 has a dioptric power profile. Referring to a curve diagram of the dioptric power profile of the ophthalmic lens 1300 in FIG. 13, in the thirteenth embodiment, the first refractive correction area A13 is located in the third annular optical area 40. The second refractive correction area B13 is located in the central optical area 10. The third refractive correction area C13 is located in the first annular optical area 20. The fourth refractive correction area D13 is located in the second annular optical area 30. The dioptric power profile presents a horizontal line in the first refractive correction area A13. The dioptric power profile presents a wavy curve varying continuously in the second refractive correction area B13, the third refractive correction area C13, and the fourth refractive correction area D13. A plurality of peaks are formed in each of the second refractive correction area B13, the third refractive correction area C13, and the fourth refractive correction area D13. More specifically, the dioptric power profile has a plurality of first peaks S1 and a plurality of first valleys T1 in the second refractive correction area B13. The dioptric power profile has a plurality of second peaks S2 and a plurality of second valleys T2 in the third refractive correction area C13. The dioptric power profile has a plurality of third peaks S3 and a plurality of third valleys T3 in the fourth refractive correction area D13. In other embodiments, the dioptric power profile has at least one peak in each of the second refractive correction area B13, the third refractive correction area C13, and the fourth refractive correction area D13.

In the thirteenth embodiment, to ensure that the ophthalmic lens 1300 could achieve a great vision correction effect, the ophthalmic lens 1300 satisfies:
(1) $3.5 mm \leq Z 1 + Z 2 + Z 3 + Z 4 \leq 5.0 mm ;$
(2) $0.25 mm \leq Z 1 \leq 1.4 mm ;$
(3) $0.25 mm \leq Z 2 \leq 1.4 mm ;$
(4) $0.25 mm \leq Z 3 \leq 1.4 mm ;$
(5) $0.25 mm \leq Z 4 \leq 1.4 mm ;$
(6) $- 1.00 D \leq PPSD \leq 1.00 D ;$
(7) $- 2.00 D \leq PPSD - PPS 1 \leq 2.00 D ;$
(8) $- 3.00 D \leq PPS 1 - PPS 2 \leq 3.00 D ;$
(9) $- 4.00 D \leq PPS 2 - PPS 3 \leq 4.00 D ;$
(10) $1.00 D \leq \left|PPS1-PPT1\right| \leq 4.00 D ;$
(11) $1.00 D \leq \left|PPS2-PPT2\right| \leq 4.00 D ;$
(12) $1.00 D \leq \left|PPS3-PPT3\right| \leq 4.00 D .$

Z1 is a distance between the center point O and a boundary of the central optical area 10. Z2 is a distance between the boundary of the central optical area 10 and a boundary of the first annular optical area 20. Z3 is a distance between the boundary of the first annular optical area 20 and a boundary of the second annular optical area 30. Z4 is a distance between the boundary of the second annular optical area 30 and a boundary of the third annular optical area 40. PPSD is a dioptric power of the first refractive correction area A13. PPS1 is a peak dioptric power of each of the first peaks S1 in the second refractive correction area B13. PPT1 is a valley dioptric power of each of the first valleys T1 in the second refractive correction area B13. In the thirteenth embodiment, PPS1 is defined as the peak dioptric power of the highest of the first peaks S1 in the second refractive correction area B13, and PPT1 is defined as the valley dioptric power of the lowest of the first valleys T1 in the second refractive correction area B13. PPS2 is a peak dioptric power of each of the second peaks S2 in the third refractive correction area C13. PPT2 is a valley dioptric power of each of the second valleys T2 in the third refractive correction area C13. In the thirteenth embodiment, PPS2 is defined as the peak dioptric power of the highest of the second peaks S2 in the third refractive correction area C13, and PPT2 is defined as the valley dioptric power of the lowest of the second valleys T2 in the third refractive correction area C13. PPS3 is a peak dioptric power of each of the third peaks S3 in the fourth refractive correction area D13. PPT3 is a valley dioptric power of each of the third valleys T3 in the fourth refractive correction area D13. In the thirteenth embodiment, PPS3 is defined as the peak dioptric power of the highest of the third peaks S3 in the fourth refractive correction area D13, and PPT3 is defined as the valley dioptric power of the lowest of the third valleys T3 in the fourth refractive correction area D13.

It could be seen from FIG. 13 that, in the thirteenth embodiment, the distance Z1 between the center point O and the boundary of the central optical area 10 is 1.0 mm. The distance Z2 between the boundary of the central optical area 10 and the boundary of the first annular optical area 20 is 1.0 mm. The distance Z3 between the boundary of the first annular optical area 20 and the boundary of the second annular optical area 30 is 1.0 mm. The distance Z4 between the boundary of the second annular optical area 30 and the boundary of the third annular optical area 40 is 1.0 mm. A total distance Z1+Z2+Z3+Z4 between the center point O of the central optical area 10 and the boundary of the third annular optical area 40 is 4.0 mm. The dioptric power PPSD of the first refractive correction area A13 is -1.00 D. The peak dioptric power PPS1 of the second refractive correction area B13 is 0.00 D. The valley dioptric power PPT1 of the second refractive correction area B13 is -1.00 D. The peak dioptric power PPS2 of the third refractive correction area C13 is 2.00 D. The valley dioptric power PPT2 of the third refractive correction area C13 is 1.00 D. The peak dioptric power PPS3 of the fourth refractive correction area D13 is 5.00 D. The valley dioptric power PPT3 of the fourth refractive correction area D13 is 4.00 D.

Therefore, based on detailed values of the aforementioned dioptric power profile, detailed values of the aforementioned conditions of the ophthalmic lens 1300 in the thirteenth embodiment are as follows:
(1) $Z 1 + Z 2 + Z 3 + Z 4 = 4.0 mm ;$
(2) $Z 1 = 1.0 mm ;$
(3) $Z 2 = 1.0 mm ;$
(4) $Z 3 = 1.0 mm ;$
(5) $Z 4 = 1.0 mm ;$
(6) $PPSD = - 1.00 D ;$
(7) $PPSD - PPS 1 = - 1.00 D ;$
(8) $PPS 1 - PPS 2 = - 2.00 D ;$
(9) $PPS 2 - PPS 3 = - 3.00 D ;$
(10) $\left|PPS1-PPT1\right| = 1.00 D ;$
(11) $\left|PPS2-PPT2\right| = 1.00 D ;$
(12) $\left|PPS3-PPT3\right| = 1.00 D .$

Therefore, in the thirteenth embodiment, the total distance Z1+Z2+Z3+Z4, the distance Z1, the distance Z2, the distance Z3, the distance Z4, the dioptric power PPSD, the peak dioptric power PPS1, the valley dioptric power PPT1, the peak dioptric power PPS2, the valley dioptric power PPT2, the peak dioptric power PPS3, and the valley dioptric power PPT3 satisfy the aforementioned conditions (1) to (12) of the ophthalmic lens 1300. In addition, in the thirteenth embodiment, a dioptric power of the second refractive correction area B13, a dioptric power of the third refractive correction area C13, and a dioptric power of the fourth refractive correction area D13 are greater than the dioptric power of the first refractive correction area A13. The dioptric power profile of the ophthalmic lens 1300 gradually increases in the second refractive correction area B13, the third refractive correction area C13, and the fourth refractive correction area D13 in order of the central optical area 10, the first annular optical area 20, and the second annular optical area 30. The fourth refractive correction area D13 is arranged on a side of the first refractive correction area A13. A difference | PPS1-PPT1 | between the peak dioptric power of the second refractive correction area B13 and the valley dioptric power of the second refractive correction area B13, a difference | PPS2-PPT2 | between the peak dioptric power of the third refractive correction area C13 and the valley dioptric power of the third refractive correction area C13, and a difference | PPS3-PPT3 | between the peak dioptric power of the fourth refractive correction area D13 and the valley dioptric power of the fourth refractive correction area D13 are identical. Therefore, through a multifocal power profile of the ophthalmic lens 1300 and reducing a dioptric power difference between any two adjacent ones of the central optical area 10, the first annular optical area 20, the second annular optical area 30, and the third annular optical area 40, eyestrain of a user could be relieved and the user could easily wear the ophthalmic lens 1300 with a clear vision.

With the aforementioned design, through the multifocal power profile of the ophthalmic lens of the first embodiment to the thirteenth embodiment and reducing the dioptric power difference between any two adjacent ones of the central optical area, the first annular optical area, the second annular optical area, and the third annular optical area, eyestrain of a user could be relieved and the user could easily wear the ophthalmic lens of the first embodiment to the thirteenth embodiment with the clear vision. In addition, the ophthalmic lens of the first embodiment to the thirteenth embodiment could be provided with the first refractive correction area, the second refractive correction area, the third refractive correction area, and the fourth refractive correction area selectively disposed in any of the central optical area, the first annular optical area, the second annular optical area, and the third annular optical area upon the required demand for the vision correction. The dioptric power profile is adjusted in each of the first refractive correction area, the second refractive correction area, the third refractive correction area, and the fourth refractive correction area, thereby increasing a diversity of the dioptric power profile of the ophthalmic lens of the first embodiment to the thirteenth embodiment.

## Claims

1. An ophthalmic lens (100, 200, 300, 400, 500, 600, 700, 800, 900, 1000, 1100, 1200, 1300), comprising:
a central optical area (10) having a center point (O);
a first annular optical area (20) surrounding the central optical area (10);
a second annular optical area (30) surrounding the first annular optical area (20);
a third annular optical area (40) surrounding the second annular optical area (30);
wherein the ophthalmic lens (100, 200, 300, 400, 500, 600, 700, 800, 900, 1000, 1100, 1200, 1300) is defined with a first refractive correction area (Al, A2, A3, A4, A5, A6, A7, A8, A9, A10, A11, A12, A13), a second refractive correction area (B1, B2, B3, B4, B5, B6, B7, B8, B9, B10, B11, B12, B13), a third refractive correction area (C1, C2, C3, C4, C5, C6, C7, C8, C9, C10, C11, C12, C13), and a fourth refractive correction area (D1, D2, D3, D4, D5, D6, D7, D8, D9, D10, D11, D12, D13); the first refractive correction area (A1, A2, A3, A4, A5, A6, A7, A8, A9, A10, A11, A12, A13), the second refractive correction area (B1, B2, B3, B4, B5, B6, B7, B8, B9, B10, B11, B12, B13), the third refractive correction area (C1, C2, C3, C4, C5, C6, C7, C8, C9, C10, C11, C12, C13), and the fourth refractive correction area (D1, D2, D3, D4, D5, D6, D7, D8, D9, D10, D11, D12, D13) are selectively disposed in any of the central optical area (10), the first annular optical area (20), the second annular optical area (30), and the third annular optical area (40); the ophthalmic lens (100, 200, 300, 400, 500, 600, 700, 800, 900, 1000, 1100, 1200, 1300) has a dioptric power profile, wherein the dioptric power profile presents a horizontal line in the first refractive correction area (A1, A2, A3, A4, A5, A6, A7, A8, A9, A10, A11, A12, A13); the dioptric power profile presents a wavy curve in the second refractive correction area (B1, B2, B3, B4, B5, B6, B7, B8, B9, B10, B11, B12, B13), the third refractive correction area (C1, C2, C3, C4, C5, C6, C7, C8, C9, C10, C11, C12, C13), and the fourth refractive correction area (D1, D2, D3, D4, D5, D6, D7, D8, D9, D10, D11, D12, D13); at least one peak is formed in each of the second refractive correction area (B1, B2, B3, B4, B5, B6, B7, B8, B9, B10, B11, B12, B13), the third refractive correction area (C1, C2, C3, C4, C5, C6, C7, C8, C9, C10, C11, C12, C13), and the fourth refractive correction area (D1, D2, D3, D4, D5, D6, D7, D8, D9, D10, D11, D12, D13);
wherein the ophthalmic lens (100, 200, 300, 400, 500, 600, 700, 800, 900, 1000, 1100, 1200, 1300) satisfies: 3.5 mm≤Z1+Z2+Z3+Z4≤5.0 mm; Z1 is a distance between the center point (O) and a boundary of the central optical area (10); Z2 is a distance between the boundary of the central optical area (10) and a boundary of the first annular optical area (20); Z3 is a distance between the boundary of the first annular optical area (20) and a boundary of the second annular optical area (30); Z4 is a distance between the boundary of the second annular optical area (30) and a boundary of the third annular optical area (40).

2. The ophthalmic lens (100, 200, 300, 400, 500, 600, 700, 800, 900, 1000, 1100, 1200) as claimed in claim 1, wherein the first refractive correction area (A1, A2, A3, A4, A5, A6, A7, A8, A9, A10, A11, A12) is located in one of the central optical area (10), the first annular optical area (20), the second annular optical area (30), and the third annular optical area (40); the second refractive correction area (B1, B2, B3, B4, B5, B6, B7, B8, B9, B10, B11, B12) or the third refractive correction area (C1, C2, C3, C4, C5, C6, C7, C8, C9, C10, C11, C12) is arranged on a side of the first refractive correction area (A1, A2, A3, A4, A5, A6, A7, A8, A9, A10, A11, A12).

3. The ophthalmic lens (1100) as claimed in claim 1, wherein the first refractive correction area (A11) is located in the first annular optical area (20) or the second annular optical area (30); the second refractive correction area (B11) and the third refractive correction area (C11) are respectively arranged on two sides of the first refractive correction area (A11).

4. The ophthalmic lens (1200, 1300) as claimed in claim 1, wherein the first refractive correction area (A12, A13) is located in one of the central optical area (10), the first annular optical area (20), the second annular optical area (30), and the third annular optical area (40); the fourth refractive correction area (D12, D13) is arranged on a side of the first refractive correction area (A12, A13).

5. The ophthalmic lens (1200) as claimed in claim 1, wherein the first refractive correction area (A12) is located in the first annular optical area (20) or the second annular optical area (30); the second refractive correction area (B12) or the third refractive correction area (C12) is arranged on a side of the first refractive correction area (A12,); the fourth refractive correction area (D12) is arranged on another side of the first refractive correction area (A12).

6. The ophthalmic lens (100, 200, 300, 400, 500, 600, 700, 800, 900, 1000, 1100, 1200, 1300) as claimed in any one of claim 1 to claim 5, wherein the ophthalmic lens (100, 200, 300, 400, 500, 600, 700, 800, 900, 1000, 1100, 1200, 1300) satisfies: -1.00 D≤PPSD≤1.00 D; PPSD is a dioptric power of the first refractive correction area (A1, A2, A3, A4, A5, A6, A7, A8, A9, A10, A11, A12, A13).

7. The ophthalmic lens (100, 200, 300, 400, 500, 600, 700, 800, 900, 1000, 1100, 1200, 1300) as claimed in any one of claim 1 to claim 5, wherein the ophthalmic lens (100, 200, 300, 400, 500, 600, 700, 800, 900, 1000, 1100, 1200, 1300) satisfies: -2.00 D≤PPSD-PPS1≤2.00 D; PPSD is a dioptric power of the first refractive correction area (A1, A2, A3, A4, A5, A6, A7, A8, A9, A10, A11, A12, A13); PPS1 is a peak dioptric power of the second refractive correction area (B1, B2, B3, B4, B5, B6, B7, B8, B9, B10, B11, B12, B13).

8. The ophthalmic lens (100, 200, 300, 400, 500, 600, 700, 800, 900, 1000, 1100, 1200, 1300) as claimed in any one of claim 1 to claim 5, wherein the ophthalmic lens (100, 200, 300, 400, 500, 600, 700, 800, 900, 1000, 1100, 1200, 1300) satisfies: -3.00 D≤PPS1-PPS2≤3.00 D; PPS1 is a peak dioptric power of the second refractive correction area (B1, B2, B3, B4, B5, B6, B7, B8, B9, B10, B11, B12, B13); PPS2 is a peak dioptric power of the third refractive correction area (C1, C2, C3, C4, C5, C6, C7, C8, C9, C10, C11, C12, C13).

9. The ophthalmic lens (100, 200, 300, 400, 500, 600, 700, 800, 900, 1000, 1100, 1200, 1300) as claimed in any one of claim 1 to claim 5, wherein the ophthalmic lens (100, 200, 300, 400, 500, 600, 700, 800, 900, 1000, 1100, 1200, 1300) satisfies: -4.00 D≤PPS2-PPS3≤4.00 D; PPS2 is a peak dioptric power of the third refractive correction area (C1, C2, C3, C4, C5, C6, C7, C8, C9, C10, C11, C12, C13); PPS3 is a peak dioptric power of the fourth refractive correction area (D1, D2, D3, D4, D5, D6, D7, D8, D9, D10, D11, D12, D13).

10. The ophthalmic lens (100, 200, 300, 400, 500, 600, 700, 800, 900, 1000, 1100, 1200, 1300) as claimed in any one of claim 1 to claim 5, wherein the dioptric power profile has a plurality of first peaks (S1) and a plurality of first valleys (T1) in the second refractive correction area (B1, B2, B3, B4, B5, B6, B7, B8, B9, B10, B11, B12, B13); the ophthalmic lens (100, 200, 300, 400, 500, 600, 700, 800, 900, 1000, 1100, 1200, 1300) satisfies: 1.00 D≤ | PPS1-PPT1 | ≤4.00 D; PPS1 is a peak dioptric power of each of the plurality of first peaks (S1) in the second refractive correction area (B1, B2, B3, B4, B5, B6, B7, B8, B9, B10, B11, B12, B13); PPT1 is a valley dioptric power of each of the plurality of first valleys (T1) in the second refractive correction area (B1, B2, B3, B4, B5, B6, B7, B8, B9, B10, B11, B12, B13).

11. The ophthalmic lens (100, 200, 300, 400, 500, 600, 700, 800, 900, 1000, 1100, 1200, 1300) as claimed in any one of claim 1 to claim 5, wherein the dioptric power profile has a plurality of second peaks (S2) and a plurality of second valleys (T2) in the third refractive correction area (C1, C2, C3, C4, C5, C6, C7, C8, C9, C10, C11, C12, C13); the ophthalmic lens (100, 200, 300, 400, 500, 600, 700, 800, 900, 1000, 1100, 1200, 1300) satisfies: 1.00 D≤ | PPS2-PPT2 | ≤4.00 D; PPS2 is a peak dioptric power of each of the plurality of second peaks (S2) in the third refractive correction area (C1, C2, C3, C4, C5, C6, C7, C8, C9, C10, C11, C12, C13); PPT2 is a valley dioptric power of each of the plurality of second valleys (T2) in the third refractive correction area (C1, C2, C3, C4, C5, C6, C7, C8, C9, C10, C11, C12, C13).

12. The ophthalmic lens (100, 200, 300, 400, 500, 600, 700, 800, 900, 1000, 1100, 1200, 1300) as claimed in any one of claim 1 to claim 5, wherein the dioptric power profile has a plurality of third peaks (S3) and a plurality of third valleys (T3) in the fourth refractive correction area (D1, D2, D3, D4, D5, D6, D7, D8, D9, D10, D11, D12, D13); the ophthalmic lens (100, 200, 300, 400, 500, 600, 700, 800, 900, 1000, 1100, 1200, 1300) satisfies: 1.00 D≤ | PPS3-PPT3 | ≤4.00 D; PPS3 is a peak dioptric power of each of the plurality of third peaks (S3) in the fourth refractive correction area (D1, D2, D3, D4, D5, D6, D7, D8, D9, D10, D11, D12, D13); PPT3 is a valley dioptric power of each of the plurality of third valleys (T3) in the fourth refractive correction area (D1, D2, D3, D4, D5, D6, D7, D8, D9, D10, D11, D12, D13).

13. The ophthalmic lens (100, 200, 300, 400, 500, 600, 700, 800, 900, 1000, 1100, 1200, 1300) as claimed in claim 1, wherein the ophthalmic lens (100, 200, 300, 400, 500, 600, 700, 800, 900, 1000, 1100, 1200, 1300) satisfies: 0.25 mm≤Z1≤1.4 mm; Z1 is the distance between the center point (O) and the boundary of the central optical area (10).

14. The ophthalmic lens (100, 200, 300, 400, 500, 600, 700, 800, 900, 1000, 1100, 1200, 1300) as claimed in claim 1, wherein the ophthalmic lens (100, 200, 300, 400, 500, 600, 700, 800, 900, 1000, 1100, 1200, 1300) satisfies: 0.25 mm≤Z2≤1.4 mm; Z2 is the distance between the boundary of the central optical area (10) and the boundary of the first annular optical area (20).

15. The ophthalmic lens (100, 200, 300, 400, 500, 600, 700, 800, 900, 1000, 1100, 1200, 1300) as claimed in claim 1, wherein the ophthalmic lens (100, 200, 300, 400, 500, 600, 700, 800, 900, 1000, 1100, 1200, 1300) satisfies: 0.25 mm≤Z3≤1.4 mm; Z3 is the distance between the boundary of the first annular optical area (20) and the boundary of the second annular optical area (30).

16. The ophthalmic lens (100, 200, 300, 400, 500, 600, 700, 800, 900, 1000, 1100, 1200, 1300) as claimed in claim 1, wherein the ophthalmic lens (100, 200, 300, 400, 500, 600, 700, 800, 900, 1000, 1100, 1200, 1300) satisfies: 0.25 mm≤Z4≤1.4 mm; Z4 is the distance between the boundary of the second annular optical area (30) and the boundary of the third annular optical area (40).
